# EUROPEAN PATENT APPLICATION

(11) **EP 4 818 133 A1**
(43) Date of publication of application: **07.10.2026**
(21) Application number: 24910461.3
(22) Date of filing: 25.11.2024
(51) Int. Cl.: C03C 10/02, C03C 21/00, C03B 32/02

(54) **SPINEL GLASS CERAMIC AND USE THEREOF**

(30) Priority: 25.12.2023 CN 202311802786; 07.06.2024 CN 202410741381
(71) Applicant: Chongqing Aureavia Hi-Tech Glass Co., Ltd., Chongqing 400713 (CN)
(72) Inventor: ZHOU, Jingpeng, Chongqing 400713 (CN); XIE, Xiaolan, Chongqing 400713 (CN); HUANG, Hao, Chongqing 400713 (CN); RAN, Rongxia, Chongqing 400713 (CN)
(74) Representative: Buzzi, Notaro & Antonielli d'Oulx S.p.A.
(86) International application number: PCT/CN2024/134178
(87) International publication number: WO 2025/139527

(57) **Abstract**

The present application provides a spinel glass ceramic and a use thereof. By providing the spinel glass ceramic with a specific composition and crystal phase structure, not only is the spinel glass ceramic endowed with high intrinsic strength, but also it can be ensured that the spinel glass ceramic can obtain a desired stress after a chemical strengthening treatment, especially an ultra-high pressure compressive stress layer depth and a relatively large deep stress. The spinel glass ceramic can be prepared into enhanced spinel glass ceramic having high mechanical strength and damage resistance.

## Description

The present disclosure claims the priority to Chinese Patent Application No. 2023118027864, titled "SPINEL GLASS CERAMIC AND USE THEREOF", filed before the China National Intellectual Property Administration on December 25, 2023, and Chinese Patent Application No. 2024107413812, titled "SPINEL GLASS CERAMIC AND USE THEREOF", filed before the China National Intellectual Property Administration on June 7, 2024, each of which is incorporated into the present disclosure by reference in its entirety.

### TECHNICAL FIELD

The present disclosure relates to the technical field of glass ceramics, in particular to a spinel glass ceramic and use thereof.

### BACKGROUND ART

Common situations of breakage in protective glass for electronic apparatuses comprise drop breakage caused by falling, compression breakage caused by contact with other objects, or impact breakage caused by collision with falling heavy objects. Analyzing its drop breakage process, it is generally due to the collision of the glass surface with sharp objects of equivalent or greater hardness (such as fine sand, cement, or small stones), causing local damage and forming a hemispherical crack propagation source at the damage point. Part of the collision energy is attenuated, and the residual energy further propagates. When the surface compressive stress level of the glass is insufficient to offset the residual energy, crack propagation will penetrate the glass surface area. When the longitudinal crack penetrates through the depth of the compressive stress layer and reaches the tensile stress layer (also known as stretching stress layer) region, the crack rapidly propagates in the tensile stress region, causing the crack to penetrate the entire glass, thereby leading to glass breakage or fracture. And analyzing the process of its compression breakage or impact breakage, the main reason is also that the force of compression or collision is greater than the surface compressive stress level of the glass, resulting in the glass to be unable to offset the energy of the compression or impact.

It can be seen that the situations of surface stress level, depth of the compressive stress layer, and deep-layer stress of the glass product are closely related to its drop damage resistance performance, compression damage resistance performance, and impact damage resistance performance. When the depth of the compressive stress layer is constant, the greater the deep-layer stress, the more residual energy from drop collision, compression, or impact that the surface compressive stress level can offset. When the surface compressive stress level is insufficient to offset the residual energy from drop collision, compression, or impact, the deeper the depth of the compressive stress layer possessed by the glass, the more beneficial it is to offset the energy driving crack propagation.

Therefore, in order to further improve the drop impact resistance performance and compression resistance performance of glass ceramics with spinel as a main crystalline phase, it is necessary to develop a spinel glass ceramic that is able to obtain a relatively large deep-layer stress and an ultra-high depth of the compressive stress layer through chemical strengthening, and to use this spinel glass ceramic to prepare a strengthened glass ceramic with high mechanical strength.

### SUMMARY

The purpose of the present disclosure is to provide a spinel glass ceramic and use thereof. This spinel glass ceramic can obtain a strengthened spinel glass ceramic with a relatively large deep-layer stress and an ultra-high depth of the compressive stress layer through chemical strengthening, this is done so as to improve the mechanical strength performance and damage resistance performance of the strengthened spinel glass ceramic, especially improving its drop impact resistance performance and compression resistance performance.

The technical solutions provided by the present disclosure are as follows:
A first aspect provides a spinel glass ceramic, wherein a composition of the spinel glass ceramic comprises: SiO₂ 35.00 mol% to 60.00 mol%, Al₂O₃ 20.00 mol% to 40.00 mol%, ZrO₂ 2.00 mol% to 8.00 mol%, MgO 3.00 mol% to 7.50 mol%, ZnO 7.00 mol% to 13.00 mol%, Na₂O 1.00 mol% to 10.00 mol%, and Li₂O 2.50 mol% to 10.00 mol%, based on a mole percentage of oxides;
the spinel glass ceramic comprises 15.00 wt% to 45.00 wt% of a (Zn, Mg)Al₂O₄ crystalline phase based on the spinel glass ceramic;
where W_{[(Zn, Mg)Al2O4]} is a weight percentage of the (Zn, Mg)Al₂O₄ crystalline phase based on the spinel glass ceramic, W_{[Al2O3]} is a weight percentage of Al₂O₃ based on the spinel glass ceramic, W_{[MgO]} is a weight percentage of MgO based on the spinel glass ceramic, W_{[ZnO]} is a weight percentage of ZnO based on the spinel glass ceramic; $A = \left(1-{W}_{\left[\left(Zn, Mg\right)Al2O4\right]}/2\right) \times {W}_{\left[Al2O3\right]} / 2 ,$ $B = \left(1-{W}_{\left[\left(Zn, Mg\right)Al2O4\right]}\right) \times \left({W}_{\left[MgO\right]}+{W}_{\left[ZnO\right]}\right) ,$ $C = A / B , and in the spinel glass ceramic , 1.50 \leq C \leq 1.85 .$

The spinel glass ceramic of the present disclosure has a specific composition and crystalline phase structure. Utilizing the synergistic effect of this composition and crystalline phase structure not only endows the spinel glass ceramic with high intrinsic strength, but also ensures that the spinel glass ceramic obtains a desired stress structure after chemical strengthening treatment, especially the ultra-high depth of the compressive stress layer and relatively large deep-layer stress. Using this spinel glass ceramic, a strengthened spinel glass ceramic with high mechanical strength and high damage resistance performance can be prepared.

In some embodiments of the present disclosure, in the spinel glass ceramic, a value of A is 10.00% to 25.00%, preferably 14.00% to 25.00%; and/or, a value of B is 7.50% to 12.50%, preferably 8.00% to 12.00%. By making the values of A and B satisfy the above ranges, it helps to make the composition and structure of the spinel glass ceramic satisfy the value range of C.

In some embodiments of the present disclosure, the spinel glass ceramic further comprises a tetragonal ZrO₂ crystalline phase. A total content of the (Zn, Mg)Al₂O₄ crystalline phase and the tetragonal ZrO₂ crystalline phase accounts for 25.00 wt% to 70.00 wt% of the spinel glass ceramic, preferably accounts for 30.00 wt% to 50.00 wt% of the spinel glass ceramic. When a total crystalline phase content W of the (Zn, Mg)Al₂O₄ crystalline phase and the tetragonal ZrO₂ crystalline phase in the spinel glass ceramic is within the above range, it is able to ensure that this spinel glass ceramic internally has a large number of crystals that is able to hinder crack propagation, which is beneficial for improving the intrinsic strength (also known as inherent strength) of the spinel glass ceramic.

In some embodiments of the present disclosure, in the spinel glass ceramic, a ratio of the (Zn, Mg)Al₂O₄ crystalline phase to the tetragonal ZrO₂ crystalline phase is 1.00 to 18.00, preferably 1.00 to 15.00. When the ratio of the (Zn, Mg)Al₂O₄ crystalline phase to the tetragonal ZrO₂ crystalline phase (that is, the mass ratio Z of the (Zn, Mg)Al₂O₄ crystalline phase to the tetragonal ZrO₂ crystalline phase) in the spinel glass ceramic is within the above range, it is able to endow this spinel glass ceramic with a specific crystalline phase structure. This crystalline phase structure is not only beneficial for improving the intrinsic strength of the spinel glass ceramic, but also beneficial for enabling the spinel glass ceramic to obtain the desired stress structure during chemical strengthening.

In some embodiments of the present disclosure, in the spinel glass ceramic, an average crystal size of the (Zn, Mg)Al₂O₄ crystalline phase is 3.0 nm to 10.0 nm, preferably 4.0 nm to 8.0 nm, more preferably 4.0 nm to 7.5 nm, further preferably 4.5 nm to 7.5 nm. When the average crystal size of the (Zn, Mg)Al₂O₄ crystalline phase in the spinel glass ceramic is within the above range, it not only helps to improve the light transmittance of the spinel glass ceramic as well as ensuring its strength, but also helps to improve the ion exchange performance of the spinel glass ceramic, enabling it to obtain the desired stress level through chemical strengthening.

In some embodiments of the present disclosure, the composition of the spinel glass ceramic further comprises: K₂O 0.00 mol% to 5.00 mol%, CaO 0.00 mol% to 10.00 mol%, B₂O₃ 0.00 mol% to 10.00 mol%, and BaO 0.00 mol% to 5.00 mol%, based on the mole percentage of oxides. In the present disclosure, K₂O, CaO, B₂O₃, or BaO are optional components. An appropriate amount can have certain improvement effects on the forming effect, crystallization effect, chemical strengthening effect, or optical effect of the spinel glass ceramic.

In some embodiments of the present disclosure, the composition of the spinel glass ceramic comprises: SiO₂ 35.00 mol% to 60.00 mol%, Al₂O₃ 20.00 mol% to 40.00 mol%, ZrO₂ 2.00 mol% to 8.00 mol%, MgO 4.00 mol% to 7.00 mol%, ZnO 9.00 mol% to 12.00 mol%, Na₂O 2.00 mol% to 10.00 mol%, and Li₂O 3.00 mol% to 10.00 mol%, based on the mole percentage of oxides. By appropriately adjusting the contents of MgO, ZnO, Li₂O, or Na₂O, it helps to ensure that the content of the main crystalline phase in the spinel glass ceramic meets the desired level, while further helping to ensure that the spinel glass ceramic achieves the desired chemical strengthening effect, this is done so as to obtain a strengthened spinel glass ceramic with a high stress level.

In some embodiments of the present disclosure, the composition of the spinel glass ceramic comprises: SiO₂ 35.00 mol% to 50.00 mol%, Al₂O₃ 25.00 mol% to 35.00 mol%, ZrO₂ 3.00 mol% to 5.00 mol%, MgO 4.00 mol% to 7.00 mol%, ZnO 9.00 mol% to 12.00 mol%, Na₂O 2.00 mol% to 10.00 mol%, and Li₂O 3.00 mol% to 10.00 mol%, based on the mole percentage of oxides. By appropriately adjusting the content of each essential oxide, it helps to ensure that the spinel glass ceramic obtains the desired crystalline phase structure and glass network structure that can achieve a high stress level, this is done so as to facilitate obtaining a strengthened spinel glass ceramic with a high stress level.

In some embodiments of the present disclosure, based on the mole percentage of each oxide in the composition of the spinel glass ceramic, the composition of the spinel glass ceramic satisfies: $1.30 \leq ZnO / MgO \leq 2.50 ;$ and/or, $0.05 \leq {Li}_{2} O / \left({Al}_{2}{O}_{3}-\left(MgO+ZnO\right)+{SiO}_{2}\right) \leq 0.20 ;$ and/or, $0.19 \leq \left({Al}_{2}{O}_{3}-\left(MgO+ZnO\right)\right) / {SiO}_{2} \leq 0.60 ;$ and/or, $0.26 \leq {Na}_{2} {O / Li}_{2} O \leq 3.00 .$

By making the spinel glass ceramic of the present disclosure satisfy at least one of the above relational expressions of ZnO/MgO, Li₂O/(Al₂O₃-(MgO+ZnO)+SiO₂), (Al₂O₃-(MgO+ZnO))/SiO₂, and Na₂O/Li₂O, it helps to further adjust the network structure and crystalline phase structure of the spinel glass ceramic, enabling the spinel glass ceramic to form a specific microstructure that helps obtain the desired stress level.

In some embodiments of the present disclosure, based on the mole percentage of each oxide in the composition of the spinel glass ceramic, the composition of the spinel glass ceramic further satisfies:
12.00 mol% ≤ ZnO+MgO ≤ 20.00 mol%, preferably, 13.00 mol% ≤ ZnO+MgO ≤ 17.30 mol%; and/or,
9.00 mol% ≤ Al₂O₃-(MgO+ZnO) ≤ 22.00 mol%, preferably, 10.00 mol% ≤ Al₂O₃-(MgO+ZnO) ≤ 20.00 mol%; and/or,
5.00 mol% ≤ Na₂O+Li₂O ≤ 15.00 mol%, preferably, 6.00 mol% ≤ Na₂O+Li₂O ≤ 13.50 mol%.

The spinel glass ceramic of the present disclosure satisfies at least one of the above relational expressions of ZnO+MgO, Al₂O₃-(MgO+ZnO), and Na₂O+Li₂O, which helps to obtain a high content of (Zn, Mg)Al₂O₄ crystalline phase with high hardness and high modulus, to further improve the intrinsic strength of the spinel glass ceramic, or helps to further improve the ion exchange effect of the spinel glass ceramic to obtain the desired stress level.

In some embodiments of the present disclosure, the spinel glass ceramic is transparent within the visible light range.

In some embodiments of the present disclosure, a transmittance of the spinel glass ceramic with a thickness of 0.7 mm at a wavelength of 550 nm is greater than or equal to 85%. The transmittance of the spinel glass ceramic with a thickness of 0.7 mm at a wavelength of 550 nm being within the above range indicates that the spinel glass ceramic of the present disclosure has high light transmittance. At the same time, the spinel glass ceramic of the present disclosure can also obtain high mechanical strength and high damage resistance performance through chemical strengthening treatment, effectively broadening the application scenarios and fields of the spinel glass ceramic of the present disclosure.

By making the spinel glass ceramic satisfy a specific crystalline phase structure, on one hand, it is beneficial for the spinel glass ceramic to obtain high intrinsic strength; on the other hand, it is beneficial for improving the chemical strengthening effect of the spinel glass ceramic, enabling it to obtain an ultra-high depth of the compressive stress layer and relatively large deep-layer stress through chemical strengthening, this is done so as to facilitate the improvement of the mechanical strength and damage resistance performance of the spinel glass ceramic. The relevant characteristics of the X-ray diffraction pattern is able to reflect the crystalline phase structure possessed by the glass ceramic, including crystalline phase composition, crystal size, etc.

In some embodiments of the present disclosure, in an X-ray diffraction pattern of the spinel glass ceramic, a peak with a maximum peak intensity among the characteristic peaks within the 2θ angle range of 28° to 32° is a first characteristic peak, and a peak with a maximum peak intensity among the characteristic peaks within the 2θ angle range of 36° to 38° is a second characteristic peak, a peak intensity ratio X of the first characteristic peak to the second characteristic peak is 0.80 to 1.50, preferably the peak intensity ratio X is 0.85 to 1.30. The peak intensity ratio X of the spinel glass ceramic being within the above range indicates that an appropriate crystal integrity is obtained in this spinel glass ceramic, thereby helping to ensure that the spinel glass ceramic obtains better optical effect and strengthening effect.

In some embodiments of the present disclosure, in the X-ray diffraction pattern of the spinel glass ceramic, a characteristic peak of [400] crystal plane of the (Zn, Mg)Al₂O₄ crystalline phase is located within the 2θ angle range of 44° to 46°, a characteristic peak of [311] crystal plane of the (Zn, Mg)Al₂O₄ crystalline phase is located within the 2θ angle range of 34° to 38°, and a characteristic peak of [440] crystal plane of the (Zn, Mg)Al₂O₄ crystalline phase is located within the 2θ angle range of 64° to 67°;
a full width at half maximum W_{[400]} of the characteristic peak of [400] crystal plane is 0.650° to 1.800°, preferably W_{[400]} is 0.900° to 1.600°;
a full width at half maximum W_{[311]} of the characteristic peak of [311] crystal plane is 0.900° to 2.800°, preferably W_{[311]} is 1.100° to 2.230°;
a full width at half maximum W_{[440]} of the characteristic peak of [440] crystal plane is 0.750° to 2.000°, preferably W_{[440]} is 0.900° to 1.600°. The W_{[400]}, W_{[311]}, and W_{[440]} of the spinel glass ceramic being within the above ranges indicates that in the crystalline phase structure of this spinel glass ceramic, the (Zn, Mg)Al₂O₄ crystalline phase has an appropriate average crystal size and satisfies a specific crystalline phase structure, which is not only beneficial for endowing the spinel glass ceramic with high intrinsic strength, but also beneficial for ensuring that the spinel glass ceramic obtains an ideal stress structure through chemical strengthening. At the same time, it helps the spinel glass ceramic obtain the desired optical performance.

A second aspect provides a glass device prepared from the spinel glass ceramic according to any of the preceding embodiments.

A third aspect provides an electronic apparatus, comprising the spinel glass ceramic according to any of the preceding embodiments.

In some embodiments of the present disclosure, the electronic apparatus comprises at least one selected from the group consisting of a mobile phone, a tablet computer, a smart wearable, a display, and a television.

One or more technical solutions of the present disclosure have the following advantages or beneficial effects:
The present disclosure provides a spinel glass ceramic with a specific composition and crystalline phase structure. Utilizing the synergistic effect of this composition and crystalline phase structure not only endows the spinel glass ceramic with high intrinsic strength, but also ensures that the spinel glass ceramic obtains the desired stress structure after chemical strengthening treatment, especially an ultra-high depth of the compressive stress layer and relatively large deep-layer stress. Using this spinel glass ceramic, a strengthened spinel glass ceramic with high mechanical strength and high damage resistance performance can be prepared. Of course, implementing any product or method of the present disclosure does not necessarily require achieving all the advantages mentioned above simultaneously.

### BRIEF DESCRIPTION OF THE DRAWINGS

The drawings described herein are intended to provide a further understanding of the present disclosure, constitute a part of the present disclosure, and serve to explain the present disclosure together with the illustrative embodiments and their descriptions of the present disclosure, but do not constitute an undue limitation of the present disclosure.
FIG. 1 is a schematic structural diagram of a strengthened glass ceramic in the prior art, where t is the thickness of the glass, d is the depth of the compressive stress layer, 11 is the compressive stress layer, and 12 is the tensile stress layer;
FIG. 2 is a comparison diagram of XRD diffraction patterns of the spinel glass ceramics in Examples 1 to 3 and Comparative Examples 6 to 9;
FIG. 3 is an XRD diffraction curve fitting schematic diagram of the spinel glass ceramic in Example 6;
FIG. 4 is the XRD diffraction pattern of the spinel glass ceramic in Comparative Example 8;
FIG. 5 is the XRD diffraction pattern of the spinel glass ceramic in Example 1;
FIG. 6 is the XRD diffraction pattern of the spinel glass ceramic in Comparative Example 10;
FIG. 7 is the XRD diffraction pattern of the spinel glass ceramic in Comparative Example 11;
FIG. 8 is a transmittance curve of the spinel glass ceramic in Example 1 under different wavelength conditions;
FIG. 9 is a comparison diagram of XRD diffraction patterns of the spinel glass ceramic in Example 1 before and after chemical strengthening;
FIG. 10 is a comparison diagram of transmittance curves of the spinel glass ceramic in Example 1 before and after chemical strengthening under different wavelength conditions;
FIG. 11 is the XRD diffraction pattern of the spinel glass ceramic in Example 2;
FIG. 12 is a schematic diagram of the uniaxial compressive strength test process in the present disclosure;
FIG. 13 is a schematic structural diagram of the holder for the uniaxial compressive strength test in the present disclosure;
FIG. 14 is a cross-sectional structural schematic diagram of the holder for the uniaxial compressive strength test in the present disclosure.

### DETAILED DESCRIPTION

To make the purpose, technical solutions, and advantages of the present disclosure clearer, the present disclosure will be further described in detail below with reference to the accompanying drawings and embodiments. Obviously, the described embodiments are only a part of the embodiments of the present disclosure, not all of them. All other embodiments obtained by those skilled in the art based on the embodiments of the present disclosure shall fall within the protection scope of the present disclosure.

### Terms and definitions

DOL_0: Depth of compressive stress layer, also known as pressure stress layer depth, refers to the distance along the thickness direction from any surface of the strengthened glass ceramic (for example, the strengthened spinel glass ceramic obtained by chemical strengthening treatment of the spinel glass ceramic in the present disclosure) to the position near that surface where the compressive stress is zero.

|CT_AV|: Refers to the absolute value of an average tensile stress in the tensile stress layer, specifically the absolute value of the average of all tensile stresses in the tensile stress layer.

CS_50: Refers to a compressive stress value at a depth of 50 µm from the surface of the strengthened glass ceramic along the thickness direction.

|CT_CV|: Refers to the absolute value of a maximum tensile stress in the tensile stress layer, specifically the absolute value of the maximum value among all tensile stresses in the tensile stress layer.

Crystalline phase content: Refers to the percentage content of the mass of the crystalline phase in the glass ceramic to the total mass of the glass ceramic.

Peak intensity: Refers to a height of the diffraction peak in the XRD pattern.

Full width at half maximum: Refers to a width at half the height of the diffraction peak in the XRD pattern, usually expressed in angle or 2θ value.

Base glass: Refers to the glass that has not been subjected to nucleation treatment, crystallization treatment, and strengthening treatment, also known as basic glass.

Glass ceramic: Also known as microcrystalline glass or crystallized glass, it is a type of solid composite material that simultaneously comprises a glassy phase and a microcrystalline phase (also known as crystallized phase, crystalline phase, crystal phase).

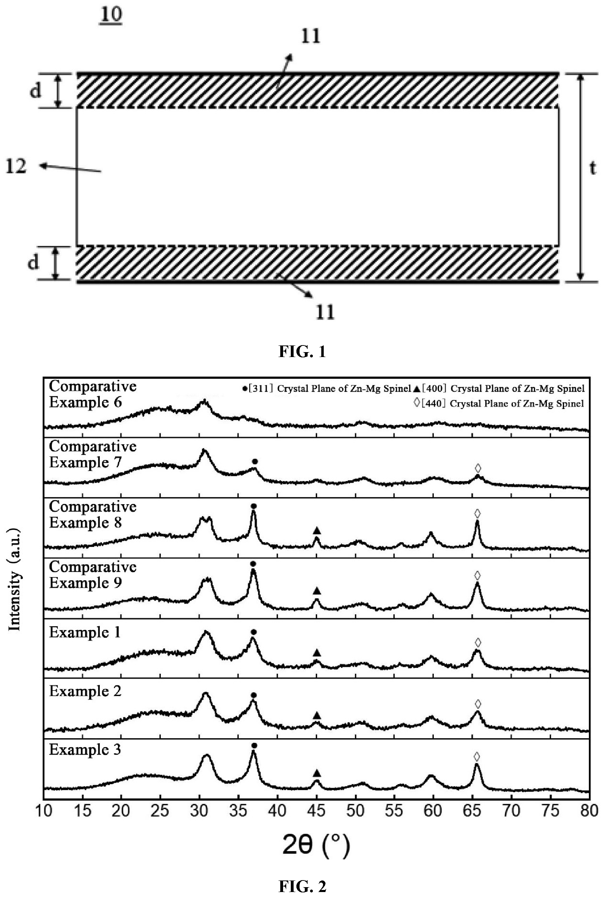

Theoretically, when the depth of the compressive stress layers extending inward from the two main surfaces of a glass product are equal or approximately equal, and the sum of the two depths of the compressive stress layers equals the thickness of the tensile stress layer, that is, as shown in FIG. 1, the depth d of the compressive stress layers 11 on both sides is approximately equal to 25% of the thickness t of the glass 10 respectively, and the thickness of the tensile stress layer 12 is approximately equal to 50% of the thickness t of the glass 10, the glass will obtain the ideal state depth of the compressive stress layer. But in fact, almost no glass products have achieved the target effect where the depth of the compressive stress layer d is approximately equal to 25% of the glass thickness t in the prior art. On one hand, this depth of the compressive stress layer is relatively difficult to achieve, and on the other hand, a higher depth of the compressive stress layer tends to be accompanied by a decrease in surface stress level and a reduction in the overall strength of the glass product in prior glass products. Because during the ion exchange process of chemical strengthening treatment, ion diffusion becomes more difficult further inwards. Simply increasing the amount of alkali metal ions to increase diffusion, is easy to lead to problems such as bursting or breakage due to excessive internal stress before reaching a greater depth. Additionally, for many glass products, after the exchanged ion diffusion reaches a given depth and the stress reaches a given level, stress relaxation occurs. The depth may increase slightly or not at all, but the stress will decrease significantly, causing the strength of the glass product to decrease. Therefore, currently, the depth of the compressive stress layer of the glass product can only be made as close as possible to this ideal effect.

For spinel glass ceramics comprising the main crystalline phase of (Zn, Mg)Al₂O₄ crystalline phase (in the present disclosure, (Zn, Mg)Al₂O₄ is used to represent the solid solution of zinc spinel and magnesium spinel, also known as zinc aluminum spinel-magnesium aluminum spinel solid solution, zinc magnesium spinel solid solution, zinc spinel-magnesium spinel solid solution, zinc magnesium aluminum spinel solid solution), simply increasing the number and types of metal ions that can undergo ion exchange cannot ensure the achievement of an ultra-high stress layer depth and deep-layer stress. On one hand, when the internal Li⁺ and Na⁺ content in the spinel glass ceramic exceeds a given amount, it can easily affect the network structure and crystalline phase structure of the spinel glass ceramic, leading to the problem of being unable to obtain the required spinel glass ceramic; on the other hand, the stress distribution and stress effects that a glass ceramic can obtain after chemical strengthening are jointly affected by the composition and crystalline phase structure of the glass ceramic. Simply increasing the number and types of alkali metal ions that can undergo ion exchange cannot guarantee that the spinel glass ceramic obtains a crystalline phase structure that can achieve the desired stress distribution.

Not limited by theory, the composition and crystalline phase structure of the spinel glass ceramic have a very close relationship with its stress distribution or stress structure after chemical strengthening. By making the spinel glass ceramic satisfy a specific composition and crystalline phase structure, the spinel glass ceramic can obtain the strengthened spinel glass ceramic with an ultra-high depth of the compressive stress layer and relatively large deep-layer stress after chemical strengthening, achieving high mechanical strength and high damage resistance performance of the spinel glass ceramic.

In view of this, a spinel glass ceramic with a specific composition and crystalline phase structure that can obtain the desired stress structure through chemical strengthening and use thereof are provided.

In some embodiments of the present disclosure, a spinel glass ceramic is provided, wherein a composition of the spinel glass ceramic comprises: SiO₂ 35.00 mol% to 60.00 mol%, Al₂O₃ 20.00 mol% to 40.00 mol%, ZrO₂ 2.00 mol% to 8.00 mol%, MgO 3.00 mol% to 7.50 mol%, ZnO 7.00 mol% to 13.00 mol%, Na₂O 1.00 mol% to 10.00 mol%, and Li₂O 2.50 mol% to 10.00 mol%, based on the mole percentage of oxides;

the spinel glass ceramic comprises 15.00 wt% to 45.00 wt% of (Zn, Mg)Al₂O₄ crystalline phase based on the spinel glass ceramic;
where W_{[(Zn, Mg)Al2O4]} is a weight percentage of the (Zn, Mg)Al₂O₄ crystalline phase based on the spinel glass ceramic, W_{[Al2O3]} is a weight percentage of Al₂O₃ based on the spinel glass ceramic, W_{[MgO]} is a weight percentage of MgO based on the spinel glass ceramic, W_{[ZnO]} is a weight percentage of ZnO based on the spinel glass ceramic; $A = \left(1-{W}_{\left[\left(Zn, Mg\right)Al2O4\right]}/2\right) \times {W}_{\left[Al2O3\right]} / 2 ,$ $B = \left(1-{W}_{\left[\left(Zn, Mg\right)Al2O4\right]}\right) \times \left({W}_{\left[MgO\right]}+{W}_{\left[ZnO\right]}\right) ,$ $C = A / B , and in the spinel glass ceramic , 1.50 \leq C \leq 1.85 .$

It should be understood that the spinel glass ceramic of the present disclosure is obtained by subjecting the base glass to a heat treatment. Therefore, based on mole percentage of oxides, the composition of this spinel glass ceramic is the same or substantially the same as that of the base glass. That is to say, in the present disclosure, the composition of the base glass used to prepare the spinel glass ceramic comprises: SiO₂ 35.00 mol% to 60.00 mol%, Al₂O₃ 20.00 mol% to 40.00 mol%, ZrO₂ 2.00 mol% to 8.00 mol%, MgO 3.00 mol% to 7.50 mol%, ZnO 7.00 mol% to 13.00 mol%, Na₂O 1.00 mol% to 10.00 mol%, and Li₂O 2.50 mol% to 10.00 mol%, based on the mole percentage of oxides.

In the present disclosure, by using a base glass satisfying the above ranges to undergo heat treatment to prepare a spinel glass ceramic that meets a specific crystalline phase structure and has a specific glass network structure, this spinel glass ceramic is able to obtain the strengthened spinel glass ceramic with an ultra-high depth of the compressive stress layer and relatively large deep-layer stress through chemical strengthening.

In the present disclosure, SiO₂ is a glass network-forming oxide, an indispensable component for constituting the glass network structure. An appropriate amount of SiO₂ can increase the stability and mechanical strength of the glass, but excessive SiO₂ will increase the viscosity of the base glass, making it more difficult to melt glass, thereby reducing the formability of the base glass. Therefore, in the present disclosure, in the composition of the base glass or the spinel glass ceramic, the content of SiO₂ is 35.00 mol% to 60.00 mol%, based on mol% of oxides.

In some embodiments of the present disclosure, the content of SiO₂ can be 35.00 mol%, 37.00 mol%, 40.00 mol%, 42.00 mol%, 45.00 mol%, 47.00 mol%, 50.00 mol%, 52.00 mol%, 55.00 mol%, 57.00 mol%, or 60.00 mol%, or a numerical value within a numerical range formed with any two of the above values as endpoints, as long as the spinel glass ceramic with the performance required by the present disclosure can be obtained. In some embodiments, the content of SiO₂ can be 36.00 mol% to 58.00 mol%, 38.00 mol% to 56.00 mol%, 40.00 mol% to 52.00 mol%, 42.00 mol% to 50.00 mol%, or 44.00 mol% to 48.00 mol%. It should be understood that in specific embodiments, any of the above ranges can be combined with any other range, as long as the spinel glass ceramic with the performance required by the present disclosure can be obtained.

In the present disclosure, an appropriate amount of Al₂O₃ can not only promote the precipitation of the main crystalline phase and inhibit the precipitation of other impurity phases such as quartz, but also be beneficial for increasing the ion exchange rate during the chemical strengthening process. However, excessive Al₂O₃ will lead to a rapid increase in the difficulty of melting base glass, and at the same time it is prone to cause the base glass to experience crystallization and devitrification due to the fast crystallization rate during normal cooling. Therefore, in the present disclosure, in the composition of the base glass or the spinel glass ceramic, the content of Al₂O₃ is 20.00 mol% to 40.00 mol%, based on mol% of oxides.

In some embodiments of the present disclosure, the content of Al₂O₃ can be 20.00 mol%, 21.00 mol%, 22.00 mol%, 23.00 mol%, 24.00 mol%, 25.00 mol%, 26.00 mol%, 27.00 mol%, 28.00 mol%, 29.00 mol%, 30.00 mol%, 31.00 mol%, 32.00 mol%, 33.00 mol%, 34.00 mol%, 35.00 mol%, 36.00 mol%, 37.00 mol%, 38.00 mol%, 39.00 mol%, or 40.00 mol%, or a numerical value within a numerical range formed with any two of the above values as endpoints, as long as the spinel glass ceramic with the performance required by the present disclosure can be obtained. In some embodiments, the content of Al₂O₃ can be 22.00 mol% to 38.00 mol%, 24.00 mol% to 36.00 mol%, 26.00 mol% to 34.00 mol%, or 28.00 mol% to 32.00 mol%. It should be understood that in specific embodiments, any of the above ranges can be combined with any other range, as long as the spinel glass ceramic with the performance required by the present disclosure can be obtained.

In the present disclosure, ZrO₂ is an effective nucleating agent. During the heat treatment of the base glass, ZrO₂ first precipitates in the base glass in the form of crystals. The ZrO₂ crystals become crystal nuclei for the subsequent growth of the main crystalline phase crystals. Within a given glass composition range, the content of ZrO₂ will affect the formation of the base glass, the crystal shape, crystal type, and crystal size of the glass ceramic prepared by heat treatment of the base glass, etc. By adjusting the composition of the base glass to meet the requirements of an appropriate amount of ZrO₂, ZrO₂ can be made to precipitate first, followed by the growth of the main crystalline phase spinel crystals. When the content of ZrO₂ is too low, it will affect the precipitation of the spinel crystalline phase; while when the content of ZrO₂ is too high, it will lead to a rapid increase in the difficulty of melting the base glass, easily causing white unmelted substances to appear in the base glass. Therefore, in the present disclosure, in the composition of the base glass or the spinel glass ceramic, the content of ZrO₂ is 2.00 mol% to 8.00 mol%, based on mol% of oxides.

In some embodiments of the present disclosure, the content of ZrO₂ can be 2.00 mol%, 2.50 mol%, 3.00 mol%, 3.50 mol%, 4.00 mol%, 4.50 mol%, 5.00 mol%, 5.50 mol%, 6.00 mol%, 6.50 mol%, 7.00 mol%, 7.50 mol%, or 8.00 mol%, or a numerical value within a numerical range formed with any two of the above values as endpoints, as long as the spinel glass ceramic with the performance required by the present disclosure can be obtained. In some embodiments, the content of ZrO₂ can be 2.50 mol% to 7.50 mol%, 3.50 mol% to 7.00 mol%, 4.50 mol% to 6.50 mol%, or 5.00 mol% to 6.00 mol%. It should be understood that in specific embodiments, any of the above ranges can be combined with any other range, as long as the spinel glass ceramic with the performance required by the present disclosure can be obtained.

In the present disclosure, MgO and ZnO are necessary components for the main crystalline phase spinel. They can promote the precipitation of spinel and reduce the difficulty of melting to a certain extent. However, excessive MgO and ZnO can easily lead to excessive growth of spinel crystal grains, making it difficult to obtain a spinel glass ceramic with high light transmittance. Therefore, in the present disclosure, in the composition of the base glass or the spinel glass ceramic, the content of MgO is 3.00 mol% to 7.50 mol%, and the content of ZnO is 7.00 mol% to 13.00 mol%, based on mol% of oxides.

In some embodiments of the present disclosure, the content of MgO can be 3.00 mol%, 3.50 mol%, 4.00 mol%, 4.50 mol%, 5.00 mol%, 5.50 mol%, 6.00 mol%, 6.50 mol%, 7.00 mol%, or 7.50 mol%, or a numerical value within a numerical range formed with any two of the above values as endpoints, as long as the spinel glass ceramic with the performance required by the present disclosure can be obtained. In some embodiments, the content of MgO can be 3.50 mol% to 7.50 mol%, 4.50 mol% to 7.00 mol%, or 5.00 mol% to 6.00 mol%. It should be understood that in specific embodiments, any of the above ranges can be combined with any other range, as long as the spinel glass ceramic with the performance required by the present disclosure can be obtained.

In some embodiments of the present disclosure, the content of ZnO can be 7.00 mol%, 7.50 mol%, 8.00 mol%, 8.50 mol%, 9.00 mol%, 9.50 mol%, 10.00 mol%, 10.50 mol%, 11.00 mol%, 11.50 mol%, 12.00 mol%, 12.50 mol%, or 13.00 mol%, or a numerical value within a numerical range formed with any two of the above values as endpoints, as long as the spinel glass ceramic with the performance required by the present disclosure can be obtained. In some embodiments, the content of ZnO can be 7.50 mol% to 12.50 mol%, 8.50 mol% to 12.00 mol%, 9.50 mol% to 11.50 mol%, or 10.00 mol% to 11.00 mol%. It should be understood that in specific embodiments, any of the above ranges can be combined with any other range, as long as the spinel glass ceramic with the performance required by the present disclosure can be obtained.

In the present disclosure, increasing the content of Na₂O helps to obtain higher surface compressive stress, and at the same time helps to reduce the melting temperature of the base glass and the crystal precipitation temperature when the base glass is used to prepare the spinel glass ceramic. However, excessive Na₂O easily causes the base glass to undergo ceramification during the annealing process, or easily causes the base glass to precipitate undesired impurity phases during heat treatment to prepare the spinel glass ceramic, thereby affecting the optical performance of the spinel glass ceramic; and when the content of Na₂O is too low, it can easily lead to an increase in the heat treatment temperature when the base glass is used to prepare the spinel glass ceramic, or easily cause the base glass to undergo phase separation directly or precipitate undesired impurity phases when preparing the spinel glass ceramic, resulting in an opaque glass ceramic. Therefore, in the present disclosure, in the composition of the base glass or the spinel glass ceramic, the content of Na₂O is 1.00 mol% to 10.00 mol%, based on mol% of oxides.

In some embodiments of the present disclosure, the content of Na₂O can be 1.00 mol%, 1.50 mol%, 2.00 mol%, 2.50 mol%, 3.00 mol%, 3.50 mol%, 4.00 mol%, 4.50 mol%, 5.00 mol%, 5.50 mol%, 6.00 mol%, 6.50 mol%, 7.00 mol%, 7.50 mol%, 8.00 mol%, 8.50 mol%, 9.00 mol%, 9.50 mol%, or 10.00 mol%, or a numerical value within a numerical range formed with any two of the above values as endpoints, as long as the spinel glass ceramic with the performance required by the present disclosure can be obtained. In some embodiments, the content of Na₂O can be 1.50 mol% to 9.50 mol%, 2.50 mol% to 9.00 mol%, 3.50 mol% to 8.50 mol%, 4.50 mol% to 7.50 mol%, or 5.00 mol% to 7.00 mol%. It should be understood that in specific embodiments, any of the above ranges can be combined with any other range, as long as the spinel glass ceramic with the performance required by the present disclosure can be obtained.

In the present disclosure, increasing the content of Li₂O helps to obtain higher deep-layer compressive stress, improve the Young modulus of the glass ceramic, and at the same time helps to reduce the melting temperature of the base glass and the crystal precipitation temperature when the base glass is used to prepare the spinel glass ceramic. However, excessive Li₂O easily causes the base glass to undergo ceramification during the annealing process, or easily causes the base glass to precipitate undesired impurity phases during heat treatment to prepare the spinel glass ceramic, or easily causes excessive crystal growth during the heat treatment process, thereby affecting the optical performance of the spinel glass ceramic; and when the content of Li₂O is too low, it can easily lead to an increase in the heat treatment temperature when the base glass is used to prepare the spinel glass ceramic, or easily cause a reduction in the deep-layer stress that the spinel glass ceramic can obtain during chemical strengthening. Therefore, in the present disclosure, in the composition of the base glass or the spinel glass ceramic, the content of Li₂O is 2.50 mol% to 10.00 mol%, based on mol% of oxides.

In some embodiments of the present disclosure, the content of Li₂O can be 2.50 mol%, 3.00 mol%, 3.50 mol%, 4.00 mol%, 4.50 mol%, 5.00 mol%, 5.50 mol%, 6.00 mol%, 6.50 mol%, 7.00 mol%, 7.50 mol%, 8.00 mol%, 8.50 mol%, 9.00 mol%, 9.50 mol%, or 10.00 mol%, or a numerical value within a numerical range formed with any two of the above values as endpoints, as long as the spinel glass ceramic with the performance required by the present disclosure can be obtained. In some embodiments, the content of Li₂O can be 3.00 mol% to 9.50 mol%, 3.50 mol% to 9.00 mol%, 4.00 mol% to 8.50 mol%, 4.50 mol% to 7.50 mol%, or 5.00 mol% to 7.00 mol%. It should be understood that in specific embodiments, any of the above ranges can be combined with any other range, as long as the spinel glass ceramic with the performance required by the present disclosure can be obtained.

In the present disclosure, the spinel glass ceramic comprises 15.00 wt% to 45.00 wt% of (Zn, Mg)Al₂O₄ crystalline phase based on the spinel glass ceramic. When the (Zn, Mg)Al₂O₄ crystalline phase content in the spinel glass ceramic is within the above range, it indicates that this spinel glass ceramic has a large number of crystals with high hardness and high modulus, which can endow the spinel glass ceramic with high intrinsic strength (also known as inherent strength). At the same time, by controlling the content of the (Zn, Mg)Al₂O₄ crystalline phase, the spinel glass ceramic satisfies a specific crystalline phase structure, which facilitates ensuring that the spinel glass ceramic obtains an ideal stress structure after chemical strengthening.

In some embodiments of the present disclosure, the crystalline phase content W_{[(Zn, Mg)Al2O4]} of the (Zn, Mg)Al₂O₄ crystalline phase in the spinel glass ceramic can be 15.00 wt%, 18.00 wt%, 20.00 wt%, 23.00 wt%, 25.00 wt%, 28.00 wt%, 30.00 wt%, 33.00 wt%, 35.00 wt%, 38.00 wt%, 40.00 wt%, 43.00 wt%, or 45.00 wt%, or a numerical value within a numerical range formed with any two of the above values as endpoints, as long as the spinel glass ceramic with the performance required by the present disclosure can be obtained. In some embodiments, the crystalline phase content W_{[(Zn, Mg)Al2O4]} of the (Zn, Mg)Al₂O₄ crystalline phase in the spinel glass ceramic can be 16.00 wt% to 45.00 wt%, 18.00 wt% to 43.00 wt%, 20.00 wt% to 42.00 wt%, 22.00 wt% to 40.00 wt%, or 25.00 wt% to 35.00 wt%. It should be understood that in specific embodiments, any of the above ranges can be combined with any other range, as long as the spinel glass ceramic with the performance required by the present disclosure can be obtained.

In some embodiments of the present disclosure, W_{[(Zn, Mg)Al2O4]} is the weight percentage of the (Zn, Mg)Al₂O₄ crystalline phase based on the spinel glass ceramic, W_{[Al2O3]} is the weight percentage of Al₂O₃ based on the spinel glass ceramic, W_{[MgO]} is the weight percentage of MgO based on the spinel glass ceramic, W_{[ZnO]} is the weight percentage of ZnO based on the spinel glass ceramic; $A = \left(1-{W}_{\left[\left(Zn, Mg\right)Al2O4\right]}/2\right) \times {W}_{\left[Al2O3\right]} / 2 ,$ $B = \left(1-{W}_{\left[\left(Zn, Mg\right)Al2O4\right]}\right) \times \left({W}_{\left[MgO\right]}+{W}_{\left[ZnO\right]}\right) ,$ $C = A / B , and in the spinel glass ceramic , 1.50 \leq C \leq 1.85 .$

In the present disclosure, by optimizing the composition and structure, the crystalline phase content of the (Zn, Mg)Al₂O₄ crystalline phase, and the contents of Al₂O₃, MgO, and ZnO in the spinel glass ceramic satisfy the range of the above characteristic C, it can ensure that the spinel glass ceramic obtains the desired stress structure after chemical strengthening, this is done so as to ensure the prepared strengthened spinel glass ceramic to achieve high mechanical strength and excellent damage resistance performance. In some embodiments, in the above spinel glass ceramic, calculated according to formula C, the value of C can be 1.52 to 1.82, 1.56 to 1.75, 1.60 to 1.70, or 1.62 to 1.68. In some embodiments, in the above spinel glass ceramic, calculated according to formula C, the value of C can be 1.51, 1.53, 1.55, 1.58, 1.60, 1.62, 1.65, 1.68, 1.70, 1.72, 1.75, 1.78, 1.80, 1.82, or 1.85, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, W_{[Al2O3]} is 35.00 wt% to 50.00 wt%.

In some embodiments of the present disclosure, W_{[MgO]} is 2.50 wt% to 4.00 wt%.

In some embodiments of the present disclosure, W_{[ZnO]} is 9.50 wt% to 14.50 wt%.

Overall, by making the composition and structure of the spinel glass ceramic satisfy the above characteristics, so that the crystalline phase content of the (Zn, Mg)Al₂O₄ crystalline phase in the spinel glass ceramic is within the above range, the spinel glass ceramic is able to have a specific crystalline phase structure and a specific glass network structure, this is done so as to improve the chemical strengthening effect of the spinel glass ceramic. This spinel glass ceramic is able to obtain the desired stress structure through chemical strengthening treatment, for example, obtaining an ultra-high depth of the compressive stress layer and relatively large deep-layer stress, obtaining a high stress level, this is done so as to enable the prepared strengthened spinel glass ceramic to obtain high mechanical strength and high damage resistance performance.

In some embodiments of the present disclosure, in the spinel glass ceramic, the value of A is 10.00% to 25.00%, preferably 14.00% to 25.00%; and/or, the value of B is 7.50% to 12.50%, preferably 8.00% to 12.00%. By making the values of A and B satisfy the above ranges, it helps to make the composition and structure of the spinel glass ceramic satisfy the value range of C, and helps the spinel glass ceramic to satisfy a specific structure that is conducive to obtaining the desired stress level.

In some embodiments of the present disclosure, the value of A can be 10.00%, 11.00%, 12.00%, 13.00%, 14.00%, 15.00%, 16.00%, 17.00%, 18.00%, 19.00%, 20.00%, 21.00%, 22.00%, 23.00%, 24.00%, or 25.00%, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, the value of B can be 7.50%, 8.00%, 8.50%, 9.00%, 9.50%, 10.00%, 10.50%, 11.00%, 11.50%, 12.00%, or 12.50%, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, the spinel glass ceramic further comprises a tetragonal ZrO₂ crystalline phase. The total content of the (Zn, Mg)Al₂O₄ crystalline phase and the tetragonal ZrO₂ crystalline phase accounts for 25.00 wt% to 70.00 wt% of the spinel glass ceramic, preferably accounts for 30.00 wt% to 50.00 wt% of the spinel glass ceramic. When the total crystalline phase content W of the (Zn, Mg)Al₂O₄ crystalline phase and the tetragonal ZrO₂ crystalline phase in the spinel glass ceramic is within the above range, it is able to ensure that this spinel glass ceramic internally has a large number of crystals that is able to hinder crack propagation, which is beneficial for improving the intrinsic strength of the spinel glass ceramic.

In some embodiments of the present disclosure, the total crystalline phase content W of the (Zn, Mg)Al₂O₄ crystalline phase and the tetragonal ZrO₂ crystalline phase can be 25.00 wt%, 28.00 wt%, 30.00 wt%, 33.00 wt%, 35.00 wt%, 38.00 wt%, 40.00 wt%, 43.00 wt%, 45.00 wt%, 48.00 wt%, 50.00 wt%, 53.00 wt%, 55.00 wt%, 58.00 wt%, 60.00 wt%, 63.00 wt%, 65.00 wt%, 68.00 wt%, or 70.00 wt%, or a numerical value within a numerical range formed with any two of the above values as endpoints, as long as the spinel glass ceramic with the performance required by the present disclosure can be obtained. In some embodiments, the total crystalline phase content W of the (Zn, Mg)Al₂O₄ crystalline phase and the tetragonal ZrO₂ crystalline phase can be 26.00 wt% to 68.00 wt%, 28.00 wt% to 66.00 wt%, 30.00 wt% to 65.00 wt%, 32.00 wt% to 60.00 wt%, 35.00 wt% to 55.00 wt%, 38.00 wt% to 50.00 wt%, or 40.00 wt% to 48.00 wt%. It should be understood that in specific embodiments, any of the above ranges can be combined with any other range, as long as the spinel glass ceramic with the performance required by the present disclosure can be obtained.

In some embodiments of the present disclosure, in the spinel glass ceramic, the ratio of the (Zn, Mg)Al₂O₄ crystalline phase to the tetragonal ZrO₂ crystalline phase is 1.00 to 18.00, preferably 1.00 to 15.00. When the ratio of the (Zn, Mg)Al₂O₄ crystalline phase to the tetragonal ZrO₂ crystalline phase (that is, the mass ratio Z of the (Zn, Mg)Al₂O₄ crystalline phase to the tetragonal ZrO₂ crystalline phase) in the spinel glass ceramic is within the above range, it is able to endow this spinel glass ceramic with a specific crystalline phase structure. This crystalline phase structure is not only beneficial for improving the intrinsic strength of the spinel glass ceramic, but also beneficial for enabling the spinel glass ceramic to obtain the desired stress structure after chemical strengthening.

In some embodiments of the present disclosure, the ratio (mass ratio Z) of the (Zn, Mg)Al₂O₄ crystalline phase to the tetragonal ZrO₂ crystalline phase can be 1.00, 2.00, 3.00, 4.00, 5.00, 6.00, 7.00, 8.00, 9.00, 10.00, 11.00, 12.00, 13.00, 14.00, 15.00, 16.00, 17.00, or 18.00, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, based on the mass of the spinel glass ceramic, the crystalline phase content W_{[ZrO2]} of the tetragonal ZrO₂ crystalline phase is 2.00 wt% to 16.00 wt%. The tetragonal ZrO₂ crystalline phase together with the (Zn, Mg)Al₂O₄ crystalline phase determines the internal crystalline phase structure of the spinel glass ceramic. By satisfying a specific content range, it is beneficial to ensure the structural strength of the spinel glass ceramic and to ensure that the spinel glass ceramic obtains an ideal stress structure after chemical strengthening.

In some embodiments of the present disclosure, the crystalline phase content W_{[ZrO2]} of the tetragonal ZrO₂ crystalline phase in the spinel glass ceramic can be 2.00 wt%, 3.00 wt%, 4.00 wt%, 5.00 wt%, 6.00 wt%, 7.00 wt%, 8.00 wt%, 9.00 wt%, 10.00 wt%, 11.00 wt%, 12.00 wt%, 13.00 wt%, 14.00 wt%, 15.00 wt%, or 16.00 wt%, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, in the spinel glass ceramic, the average crystal size of the (Zn, Mg)Al₂O₄ crystalline phase is 3.0 nm to 10.0 nm, preferably 4.0 nm to 8.0 nm, more preferably 4.0 nm to 7.5 nm, further preferably 4.5 nm to 7.5 nm. When the average crystal size of the (Zn, Mg)Al₂O₄ crystalline phase in the spinel glass ceramic is within the above range, it not only helps to improve the light transmittance of the spinel glass ceramic while ensuring its strength, but also helps to improve the ion exchange performance of the spinel glass ceramic, enabling it to obtain the desired stress level through chemical strengthening.

In some embodiments of the present disclosure, the average crystal size of the (Zn, Mg)Al₂O₄ crystalline phase can be 3.0 nm, 4.0 nm, 4.2 nm, 4.5 nm, 4.8 nm, 5.0 nm, 5.2 nm, 5.5 nm, 5.8 nm, 6.0 nm, 6.2 nm, 6.5 nm, 6.8 nm, 7.0 nm, 7.2 nm, 7.5 nm, 8.0 nm, or 10.0 nm, or a numerical value within a numerical range formed with any two of the above values as endpoints, as long as the spinel glass ceramic with the performance required by the present disclosure can be obtained. In some embodiments, the average crystal size of the (Zn, Mg)Al₂O₄ crystalline phase can be 4.0 nm to 9.0 nm, 4.5 nm to 8.0 nm, 4.5 nm to 7.5 nm, or 4.5 nm to 7.0 nm. It should be understood that in specific embodiments, any of the above ranges can be combined with any other range, as long as the spinel glass ceramic with the performance required by the present disclosure can be obtained.

In some embodiments of the present disclosure, the composition of the base glass used to prepare the spinel glass ceramic or the composition of the spinel glass ceramic comprises: SiO₂ 35.00 mol% to 60.00 mol%, Al₂O₃ 20.00 mol% to 40.00 mol%, ZrO₂ 2.00 mol% to 8.00 mol%, MgO 3.00 mol% to 7.50 mol%, ZnO 7.00 mol% to 13.00 mol%, Na₂O 1.00 mol% to 10.00 mol%, Li₂O 2.50 mol% to 10.00 mol%, K₂O 0.00 mol% to 5.00 mol%, CaO 0.00 mol% to 10.00 mol%, B₂O₃ 0.00 mol% to 10.00 mol%, and BaO 0.00 mol% to 5.00 mol%, based on the mole percentage of oxides.

Apart from the necessary components for preparing the spinel glass ceramic of the present disclosure, in the present disclosure, K₂O, CaO, B₂O₃, or BaO are optional components. An appropriate amount can have certain improvement effects on the forming effect, crystallization effect, chemical strengthening effect, or optical effect of the spinel glass ceramic.

In the present disclosure, K₂O is an optional component that helps improve the formability of glass. Since the radius of K⁺ is larger than that of Na⁺, an appropriate amount of K₂O is able to reduce the crystallization tendency of the base glass during the preparation process, and increase the light transmittance and gloss of the spinel glass ceramic. In the present disclosure, in the base glass or the spinel glass ceramic, the content of K₂O is 0.00 mol% to 5.00 mol%, based on mol% of oxides. When K₂O is added within this content range, it is able to not only achieve the aforementioned effects, but also be less likely to cause a reduction in the chemical stability and hardness of the spinel glass ceramic, avoiding damage to the spinel glass ceramic.

In some embodiments of the present disclosure, the content of K₂O can be 0.00 mol%, 0.50 mol%, 1.00 mol%, 1.50 mol%, 2.00 mol%, 2.50 mol%, 3.00 mol%, 3.50 mol%, 4.00 mol%, 4.50 mol%, or 5.00 mol%, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In the present disclosure, B₂O₃ is an optional component that helps reduce the difficulty of melting the base glass. An appropriate amount of B₂O₃ further helps promote the precipitation of spinel, but excessive amount of B₂O₃ is prone to cause opalescence or the precipitation of impurity phases affecting the transparency of the spinel glass ceramic when the base glass is subjected to heat treatment to prepare the spinel glass ceramic. In the present disclosure, the content of B₂O₃ can be 0.00 mol% to 10.00 mol%, based on mol% of oxides.

In some embodiments of the present disclosure, the content of B₂O₃ can be 0.00 mol%, 0.50 mol%, 1.00 mol%, 1.50 mol%, 2.00 mol%, 2.50 mol%, 3.00 mol%, 3.50 mol%, 4.00 mol%, 4.50 mol%, 5.00 mol%, 5.50 mol%, 6.00 mol%, 6.50 mol%, 7.00 mol%, 7.50 mol%, 8.00 mol%, 8.50 mol%, 9.00 mol%, 9.50 mol%, or 10.00 mol%, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In the present disclosure, BaO is an optional component that helps improve the melting effect of the base glass. An appropriate amount of BaO can further inhibit the growth of crystal grains to a certain extent, thereby having a certain improvement effect on the optical performance of the spinel glass ceramic. However, excessive amount of BaO is prone to affect the chemical strengthening effect of the spinel glass ceramic, greatly reducing the stress level it can obtain. In the present disclosure, the content of BaO is 0.00 mol% to 5.00 mol%, based on mol% of oxides.

In some embodiments of the present disclosure, the content of BaO can be 0.00 mol%, 0.50 mol%, 1.00 mol%, 1.50 mol%, 2.00 mol%, 2.50 mol%, 3.00 mol%, 3.50 mol%, 4.00 mol%, 4.50 mol%, or 5.00 mol%, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In the present disclosure, CaO is an optional component that helps reduce the viscosity of the glass melt and enhance the formability of the base glass. An appropriate amount of CaO further helps increase the strain point and Young modulus, and is beneficial for improving the ion exchange capability of the spinel glass ceramic. At the same time, an appropriate amount of CaO can further increase the gloss and transparency of the base glass, reduce the crystallization tendency of the base glass, and slow down the hardening speed of the base glass. However, excessive amount of CaO is prone to increase the density of the glass, thereby affecting the ion exchange performance of the spinel glass ceramic. In the present disclosure, the content of CaO is 0.00 mol% to 10.00 mol%, based on mol% of oxides.

In some embodiments of the present disclosure, the content of CaO can be 0.00 mol%, 0.50 mol%, 1.00 mol%, 1.50 mol%, 2.00 mol%, 2.50 mol%, 3.00 mol%, 3.50 mol%, 4.00 mol%, 4.50 mol%, 5.00 mol%, 5.50 mol%, 6.00 mol%, 6.50 mol%, 7.00 mol%, 7.50 mol%, 8.00 mol%, 8.50 mol%, 9.00 mol%, 9.50 mol%, or 10.00 mol%, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, the composition of the base glass used to prepare the spinel glass ceramic or the composition of the spinel glass ceramic comprises: SiO₂ 35.00 mol% to 60.00 mol%, Al₂O₃ 20.00 mol% to 40.00 mol%, ZrO₂ 2.00 mol% to 8.00 mol%, MgO 4.00 mol% to 7.00 mol%, ZnO 9.00 mol% to 12.00 mol%, Na₂O 2.00 mol% to 10.00 mol%, Li₂O 3.00 mol% to 10.00 mol%, K₂O 0.00 mol% to 5.00 mol%, CaO 0.00 mol% to 10.00 mol%, B₂O₃ 0.00 mol% to 10.00 mol%, and BaO 0.00 mol% to 5.00 mol%, based on the mole percentage of oxides. By appropriately adjusting the contents of MgO, ZnO, Li₂O, or Na₂O, it helps to ensure that the content of the main crystalline phase in the spinel glass ceramic meets the desired level, while also helping to ensure that the spinel glass ceramic achieves the desired chemical strengthening effect, this is done so as to obtain a strengthened spinel glass ceramic with a high stress level.

In some embodiments of the present disclosure, the composition of the base glass used to prepare the spinel glass ceramic or the composition of the spinel glass ceramic comprises: SiO₂ 35.00 mol% to 50.00 mol%, Al₂O₃ 25.00 mol% to 35.00 mol%, ZrO₂ 3.00 mol% to 5.00 mol%, MgO 4.00 mol% to 7.00 mol%, ZnO 9.00 mol% to 12.00 mol%, Na₂O 2.00 mol% to 10.00 mol%, Li₂O 3.00 mol% to 10.00 mol%, K₂O 0.00 mol% to 5.00 mol%, CaO 0.00 mol% to 10.00 mol%, B₂O₃ 0.00 mol% to 10.00 mol%, and BaO 0.00 mol% to 5.00 mol%, based on the mole percentage of oxides. By appropriately adjusting the content of each essential oxide, it helps to ensure that the spinel glass ceramic obtains the desired crystalline phase structure and glass network structure that can achieve a high stress level, this is done so as to facilitate obtaining a strengthened spinel glass ceramic with a high stress level.

In some embodiments of the present disclosure, based on the mole percentage of each oxide in the composition, the composition of the base glass or the spinel glass ceramic satisfies: 1.30 ≤ ZnO/MgO ≤ 2.50; by making ZnO and MgO satisfy a specific content relationship, it is beneficial to ensure the formation of the desired main crystalline phase structure.

In some embodiments of the present disclosure, the value of ZnO/MgO can be 1.30, 1.40, 1.50, 1.60, 1.70, 1.80, 1.90, 2.00, 2.10, 2.20, 2.30, 2.40, or 2.50, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, based on the mole percentage of each oxide in the composition, the composition of the base glass or the spinel glass ceramic satisfies: 0.05 ≤ Li₂O/(Al₂O₃-(MgO+ZnO)+SiO₂) ≤ 0.20; by making Li₂O, Al₂O₃, MgO, ZnO, and SiO₂ satisfy a specific content relationship, it helps to improve the ion exchange performance of the spinel glass ceramic, helps the spinel glass ceramic to obtain a high depth of the compressive stress layer and relatively large deep-layer stress through chemical strengthening, this is done so as to help to improve the mechanical strength and damage resistance performance of the spinel glass ceramic, especially improving its drop impact resistance performance.

In some embodiments of the present disclosure, the value of Li₂O/( Al₂O₃-(MgO+ZnO)+SiO₂) can be 0.05, 0.06, 0.07, 0.08, 0.09, 0.10, 0.11, 0.12, 0.13, 0.14, 0.15, 0.16, 0.17, 0.18, 0.19, or 0.20, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, based on the mole percentage of each oxide in the composition, the composition of the base glass or the spinel glass ceramic satisfies: 0.19 ≤ (Al₂O₃-(MgO+ZnO))/SiO₂ ≤ 0.60; by making Al₂O₃, MgO, ZnO, and SiO₂ satisfy a specific content relationship, it is able to ensure that there is an appropriate amount of Al in the residual glass phase of the spinel glass ceramic. On one hand, it helps to exert the synergistic effect of Si and Al, enabling the residual glass phase to form a specific network structure, thereby improving the intrinsic strength of the spinel glass ceramic; on the other hand, it helps to promote ion exchange and improve the chemical strengthening effect of the spinel glass ceramic.

In some embodiments of the present disclosure, the value of (Al₂O₃-(MgO+ZnO))/SiO₂ can be 0.19, 0.20, 0.23, 0.25, 0.28, 0.30, 0.33, 0.35, 0.38, 0.40, 0.43, 0.45, 0.48, 0.50, 0.53, 0.55, 0.58, or 0.60, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, based on the mole percentage of each oxide in the composition, the composition of the base glass or the spinel glass ceramic satisfies: 0.26 ≤ Na₂O/Li₂O ≤ 3.00; by making Na and Li satisfy a specific content relationship, it helps to ensure that the spinel glass ceramic obtains the desired surface stress level and deep-layer stress level after chemical strengthening, this is done so as to obtain the desired stress structure, achieving high mechanical strength and high damage resistance performance.

In some embodiments of the present disclosure, the value of Na₂O/Li₂O can be 0.26, 0.30, 0.50, 0.80, 1.00, 1.20, 1.50, 1.80, 2.00, 2.20, 2.30, 2.50, 2.80, or 3.00, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In the present disclosure, by making the composition of the spinel glass ceramic of the present disclosure satisfy at least one of the above relational expressions of ZnO/MgO, Li₂O/(Al₂O₃-(MgO+ZnO)+SiO₂), (Al₂O₃-(MgO+ZnO))/SiO₂, and Na₂O/Li₂O, it helps to further adjust the network structure and crystalline phase structure of the spinel glass ceramic, enabling the spinel glass ceramic to form a specific microstructure that helps obtain the desired stress level.

In some embodiments of the present disclosure, based on the mole percentage of each oxide in the composition, the composition of the base glass or the spinel glass ceramic further satisfies: 12.00 mol% ≤ ZnO+MgO ≤ 20.00 mol%, preferably, 13.00 mol% ≤ ZnO+MgO ≤ 17.30 mol%; by ensuring that the composition has sufficient amounts of ZnO and MgO, it helps to ensure that a sufficient content of the main crystalline phase can precipitate in the spinel glass ceramic, thereby enabling it to form the desired crystalline phase structure.

In some embodiments of the present disclosure, the value of ZnO+MgO can be 12.00 mol%, 13.00 mol%, 13.30 mol%, 13.50 mol%, 13.80 mol%, 14.00 mol%, 14.30 mol%, 14.50 mol%, 14.80 mol%, 15.00 mol%, 15.30 mol%, 15.50 mol%, 15.80 mol%, 16.00 mol%, 16.30 mol%, 16.50 mol%, 16.80 mol%, 17.00 mol%, 17.30 mol%, 18.00 mol%, 19.00 mol%, or 20.00 mol%, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, based on the mole percentage of each oxide in the composition, the composition of the base glass or the spinel glass ceramic further satisfies: 9.00 mol% ≤ Al₂O₃-(MgO+ZnO) ≤ 22.00 mol%, preferably, 10.00 mol% ≤ Al₂O₃-(MgO+ZnO) ≤ 20.00 mol%; by making the content of Al₂O₃ in the composition higher than the sum of the contents of MgO and ZnO, while ensuring the formation of the main crystalline phase, it can ensure that there is an appropriate amount of Al in the residual glass phase. On one hand, it helps to exert the synergistic effect of Si and Al, enabling the residual glass phase to form a specific network structure, this is done so as to improve the intrinsic strength of the spinel glass ceramic; on the other hand, it helps to promote ion exchange and improve the chemical strengthening effect of the spinel glass ceramic.

In some embodiments of the present disclosure, the value of Al₂O₃-(MgO+ZnO) can be 9.00 mol%, 10.00 mol%, 11.00 mol%, 12.00 mol%, 13.00 mol%, 14.00 mol%, 15.00 mol%, 16.00 mol%, 17.00 mol%, 18.00 mol%, 19.00 mol%, 20.00 mol%, 21.00 mol%, or 22.00 mol%, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, based on the mole percentage of each oxide in the composition, the composition of the base glass or the spinel glass ceramic further satisfies: 5.00 mol% ≤ Na₂O+Li₂O ≤ 15.00 mol%, preferably, 6.00 mol% ≤ Na₂O+Li₂O ≤ 13.50 mol%. By ensuring that the composition has sufficient amounts of Na and Li, it helps to improve the ion exchange performance of the spinel glass ceramic, this is done so as to ensure that the spinel glass ceramic can obtain the desired surface stress level and deep-layer stress level after chemical strengthening, this is done so as to obtain the desired stress structure, achieving high mechanical strength and high damage resistance performance of the strengthened spinel glass ceramic.

In some embodiments of the present disclosure, the value of Na₂O+Li₂O can be 5.00 mol%, 5.50 mol%, 6.00 mol%, 6.50 mol%, 7.00 mol%, 7.50 mol%, 8.00 mol%, 8.50 mol%, 9.00 mol%, 9.50 mol%, 10.00 mol%, 10.50 mol%, 11.00 mol%, 11.50 mol%, 12.00 mol%, 12.50 mol%, 13.00 mol%, 13.50 mol%, 14.00 mol%, 14.50 mol%, or 15.00 mol%, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In the present disclosure, by making the spinel glass ceramic of the present disclosure satisfy at least one of the above relational expressions of ZnO+MgO, Al₂O₃-(MgO+ZnO), and Na₂O+Li₂O, it helps to obtain a high content of (Zn, Mg)Al₂O₄ crystalline phase with high hardness and high modulus, to further improve the intrinsic strength of the spinel glass ceramic, or helps to further improve the ion exchange effect of the spinel glass ceramic to obtain the desired stress level.

In the present disclosure, the substances in the above relational expressions of ZnO/MgO, Li₂O/(Al₂O₃-(MgO+ZnO)+SiO₂), (Al₂O₃-(MgO+ZnO))/SiO₂, Na₂O/Li₂O, ZnO+MgO, Al₂O₃-(MgO+ZnO), and Na₂O+Li₂O represent the mole percentage content of the corresponding substances. For example, ZnO represents the mole percentage content of ZnO, MgO represents the mole percentage content of MgO, etc., which will not be repeated one by one in the present disclosure.

In some embodiments of the present disclosure, the spinel glass ceramic is transparent within the visible light range. In the present disclosure, the visible light range refers to light within the wavelength range of 360 nm to 740 nm; "transparent within the visible light range" means that the average transmittance to visible light is greater than 80%.

In some embodiments of the present disclosure, a transmittance T of the spinel glass ceramic with a thickness of 0.7 mm at a wavelength of 550 nm is greater than or equal to 85%. The transmittance of the spinel glass ceramic with a thickness of 0.7 mm at a wavelength of 550 nm being within the above range indicates that the spinel glass ceramic of the present disclosure has high light transmittance. At the same time, the spinel glass ceramic of the present disclosure can also obtain high mechanical strength and high damage resistance performance through chemical strengthening treatment, with excellent drop impact resistance performance, effectively broadening the application scenarios and fields of the spinel glass ceramic of the present disclosure. In some embodiments of the present disclosure, the transmittance T can be 85%, 86%, 87%, 88%, 89%, 90%, 91%, 92%, 93%, 94%, 95%, 96%, 97%, 98%, or 99%, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In the present disclosure, by making the spinel glass ceramic satisfy a specific crystalline phase structure, on one hand, it is beneficial for the spinel glass ceramic to obtain high intrinsic strength; on the other hand, it is beneficial for improving the chemical strengthening effect of the spinel glass ceramic, enabling it to obtain an ultra-high depth of the compressive stress layer and relatively large deep-layer stress through chemical strengthening, this is done so as to facilitate the improvement of the mechanical strength and damage resistance performance of the spinel glass ceramic. The relevant characteristics of the X-ray diffraction pattern can reflect the crystalline phase structure possessed by the glass ceramic, including crystalline phase composition, crystal size, etc.

In some embodiments of the present disclosure, in the X-ray diffraction pattern of the spinel glass ceramic, the peak with the maximum peak intensity among the characteristic peaks within the 2θ angle range of 28° to 32° is the first characteristic peak, and the peak with the maximum peak intensity among the characteristic peaks within the 2θ angle range of 36° to 38° is the second characteristic peak, the peak intensity ratio X of the first characteristic peak to the second characteristic peak is 0.80 to 1.50, preferably the peak intensity ratio X is 0.85 to 1.30. The peak intensity ratio X of the spinel glass ceramic being within the above range indicates that an appropriate crystal integrity is obtained in this spinel glass ceramic, which helps to ensure that the spinel glass ceramic obtains better optical effect and strengthening effect. In some embodiments of the present disclosure, the peak intensity ratio X can be 0.80, 0.90, 1.00, 1.10, 1.20, 1.30, 1.40, or 1.50, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, in the X-ray diffraction pattern of the spinel glass ceramic, the characteristic peak of [400] crystal plane of the (Zn, Mg)Al₂O₄ crystalline phase is located within the 2θ angle range of 44° to 46°, the characteristic peak of [311] crystal plane of the (Zn, Mg)Al₂O₄ crystalline phase is located within the 2θ angle range of 34° to 38°, and the characteristic peak of [440] crystal plane of the (Zn, Mg)Al₂O₄ crystalline phase is located within the 2θ angle range of 64° to 67°; the full width at half maximum W_{[400]} of the characteristic peak of [400] crystal plane is 0.650° to 1.800°, preferably W_{[400]} is 0.900° to 1.600°; the full width at half maximum W_{[311]} of the characteristic peak of [311] crystal plane is 0.900° to 2.800°, preferably W_{[311]} is 1.100° to 2.230°; the full width at half maximum W_{[440]} of the characteristic peak of [440] crystal plane is 0.750° to 2.000°, preferably W_{[440]} is 0.900° to 1.600°. The W_{[400]}, W_{[311]}, and W_{[440]} of the spinel glass ceramic being within the above ranges indicates that in the crystalline phase structure of this spinel glass ceramic, the (Zn, Mg)Al₂O₄ crystalline phase has an appropriate average crystal size and satisfies a specific crystalline phase structure. This is not only beneficial for endowing the spinel glass ceramic with high intrinsic strength, but also beneficial for ensuring that the spinel glass ceramic obtains an ideal stress structure through chemical strengthening. At the same time, it helps the spinel glass ceramic obtain the desired optical performance.

In some embodiments of the present disclosure, the value of W_{[400]} can be 0.650°, 0.700°, 0.800°, 0.900°, 1.000°, 1.100°, 1.200°, 1.300°, 1.400°, 1.500°, 1.600°, 1.700°, or 1.800°, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, the value of W_{[311]} can be 0.900°, 1.000°, 1.100°, 1.200°, 1.300°, 1.400°, 1.500°, 1.600°, 1.700°, 1.800°, 1.900°, 2.000°, 2.100°, 2.200°, 2.230°, 2.300°, 2.400°, 2.500°, 2.600°, 2.700°, or 2.800°, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, the value of W_{[440]} can be 0.750°, 0.800°, 0.900°, 1.000°, 1.100°, 1.200°, 1.300°, 1.400°, 1.500°, 1.600°, 1.700°, 1.800°, 1.900°, or 2.000°, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

The present disclosure does not particularly limit the thickness t of the spinel glass ceramic, as long as the purpose of the present disclosure can be achieved. For example, the thickness t of the spinel glass ceramic satisfies: 0.2 mm ≤ t ≤ 5.0 mm, preferably 0.2 mm ≤ t ≤ 2.0 mm.

In the present disclosure, the spinel glass ceramic or the strengthened spinel glass ceramic prepared from it can be 2D, 2.5D, 3D, or irregularly shaped glass products. In the present disclosure, the spinel glass ceramic or the strengthened spinel glass ceramic prepared from it can be glass products of uniform thickness or non-uniform thickness. Those skilled in the art can choose according to requirements. Here, "non-uniform thickness" means that the spinel glass ceramic or the strengthened spinel glass ceramic prepared from it comprises at least two parts with different thicknesses.

In some embodiments of the present disclosure, the spinel glass ceramic according to any of the preceding embodiments can be used to prepare a strengthened spinel glass ceramic with high mechanical strength and high damage resistance performance after chemical strengthening treatment. This strengthened spinel glass ceramic comprises a compressive stress layer region extending from the surface of the strengthened spinel glass ceramic to the depth of compression, and has a tensile stress layer region internally.

It should be understood that after chemical strengthening treatment and the ion exchange process, the composition at the surface of the glass ceramic product may differ from the composition of the glass ceramic before it underwent the ion exchange process. This is because during ion exchange, one type of alkali metal ion (such as Li⁺ or Na⁺) at the surface of the just-formed glass ceramic (such as the spinel glass ceramic in the present disclosure) is replaced by a larger alkali metal ion (such as Na⁺ or K⁺) respectively. However, in an embodiment, the glass composition and phase assemblage at the depth center of or near the depth center of the glass ceramic product will still be the same as the composition of the just-formed glass ceramic. That is to say, in the present disclosure, the composition and phase assemblage at the center of the strengthened spinel glass ceramic obtained after chemical strengthening are the same or substantially the same as those of the spinel glass ceramic of the present disclosure.

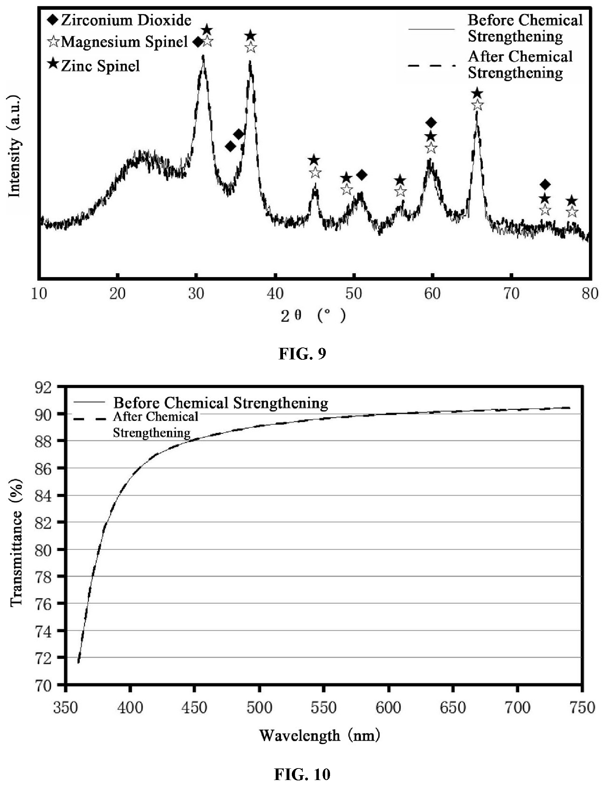

At the same time, in the spinel glass ceramic of the present disclosure, neither the main crystalline phase (Zn, Mg)Al₂O₄ crystalline phase nor the secondary crystalline phase tetragonal ZrO₂ crystalline phase comprises alkali metal ions, so they do not participate in the ion exchange during the chemical strengthening process. Based on this, the crystalline phase structure of the strengthened spinel glass ceramic prepared through chemical strengthening in the present disclosure is basically the same as that of the spinel glass ceramic. That is, the crystalline phase structure characteristics such as crystalline phase content, crystal composition, crystal size, and the X-ray diffraction pattern characteristics possessed by the strengthened spinel glass ceramic obtained through the chemical strengthening process in the present disclosure are substantially the same as those of the spinel glass ceramic of the present disclosure. As shown in FIG. 9, in Example 1, the XRD patterns of the spinel glass ceramic before chemical strengthening and the strengthened spinel glass ceramic after chemical strengthening are substantially the same. Additionally, as shown in FIG. 10, in the present disclosure, before and after chemical strengthening, the transmittance of the spinel glass ceramic is also basically the same as that of the strengthened spinel glass ceramic. That is to say, in the present disclosure, by using a spinel glass ceramic with high transmittance, a strengthened spinel glass ceramic product with equally excellent transmittance can be obtained through chemical strengthening treatment.

In some embodiments of the present disclosure, the above strengthened spinel glass ceramic has a depth of the compressive stress layer DOL_0 ≥ 0.21t, preferably, 0.21t ≤ DOL_0 ≤ 0.25t, where t is a thickness of the strengthened spinel glass ceramic. For example, when the thickness t of the strengthened spinel glass ceramic is 0.7 mm, 147 µm ≤ DOL_0 ≤ 175 µm. Specifically, DOL_0 can be 147 µm, 154 µm, 161 µm, 168 µm, or 175 µm, or a numerical value within a numerical range formed with any two of the above values as endpoints, as long as the strengthened spinel glass ceramic with the performance required by the present disclosure can be obtained. It should be understood that in specific embodiments, any of the above ranges can be combined with any other range, as long as the strengthened spinel glass ceramic with the performance required by the present disclosure can be obtained. The strengthened spinel glass ceramic having the above DOL_0 indicates that the strengthened spinel glass ceramic has an ultra-high depth of the compressive stress layer, this is done so as to more favorably offset the energy driving crack propagation during external impact processes.

In some embodiments of the present disclosure, the above strengthened spinel glass ceramic has a CS_50 ≥ 100 MPa, preferably, 100 MPa ≤ CS_50 ≤ 250 MPa. The range of CS_50 of the strengthened spinel glass ceramic being within the above range indicates that the compressive stress at a depth of 50 µm from the surface of the strengthened spinel glass ceramic is high, which further indicates that this strengthened spinel glass ceramic has a relatively high surface stress level, this is done so as to effectively improve the drop impact resistance performance of the strengthened spinel glass ceramic.

In some embodiments of the present disclosure, the above strengthened spinel glass ceramic has a |CT_AV| ≥ 70 MPa, preferably, 70 MPa ≤ |CT_AV| ≤ 110 MPa. The strengthened spinel glass ceramic having the above |CT_AV| indicates that the spinel glass ceramic has relatively large deep-layer stress, directly reflecting that this strengthened spinel glass ceramic has a high surface stress level, which is beneficial for offsetting more external impact energy.

In some embodiments of the present disclosure, the above strengthened spinel glass ceramic has a |CT_CV| ≥ 80 MPa, preferably, 80 MPa ≤ |CT_CV| ≤ 150 MPa. The |CT_CV| of the strengthened spinel glass ceramic being within the above range indicates that the strengthened spinel glass ceramic has relatively large deep-layer stress, and is able to reflect that this strengthened spinel glass ceramic has a high surface stress level, which is beneficial for offsetting more external impact energy.

In some embodiments of the present disclosure, the above strengthened spinel glass ceramic has a Vickers hardness greater than or equal to 790 kgf/mm², preferably 790 kgf/mm² to 1000 kgf/mm². The Vickers hardness of the strengthened spinel glass ceramic being within the above range indicates that the strengthened spinel glass ceramic has high hardness, thereby ensuring its excellent mechanical properties.

In some embodiments of the present disclosure, the above strengthened spinel glass ceramic has a fracture toughness greater than or equal to 1.00 MPa·m^{1/2}, preferably greater than or equal to 1.20 MPa·m^{1/2}. In some embodiments, the fracture toughness of the above strengthened spinel glass ceramic can be 1.00 to 2.00 MPa·m^{1/2}, 1.20 MPa·m^{1/2} to 2.00 MPa·m^{1/2}, or 1.55 MPa·m^{1/2} to 2.00 MPa·m^{1/2}, as long as the strengthened spinel glass ceramic with the performance required by the present disclosure can be obtained. It should be understood that in specific embodiments, any of the above ranges can be combined with any other range, as long as the strengthened spinel glass ceramic with the performance required by the present disclosure can be obtained. The fracture toughness of the strengthened spinel glass ceramic being within the above range indicates that the strengthened spinel glass ceramic has high fracture toughness, thereby ensuring its excellent mechanical properties.

In some embodiments of the present disclosure, for the above strengthened spinel glass ceramic with a thickness of 0.7 mm, using 80-mesh sandpaper for drop resistance testing, an average sandpaper drop resistance height of the strengthened spinel glass ceramic is greater than or equal to 1.00 m, preferably the average sandpaper drop resistance height is greater than or equal to 1.40 m. In some embodiments, for the above strengthened spinel glass ceramic with a thickness of 0.7 mm, using 80-mesh sandpaper for drop resistance testing, the average sandpaper drop resistance height of the strengthened spinel glass ceramic can be 1.00 m to 2.50 m, 1.40 m to 2.50 m, or 1.50 m to 2.50 m, as long as the strengthened spinel glass ceramic with the performance required by the present disclosure can be obtained. It should be understood that in specific embodiments, any of the above ranges can be combined with any other range, as long as the strengthened spinel glass ceramic with the performance required by the present disclosure can be obtained. The average sandpaper drop resistance height H of the strengthened spinel glass ceramic with a thickness of 0.7 mm being within the above range indicates that this strengthened spinel glass ceramic has high damage resistance performance, especially excellent drop impact resistance performance.

In some embodiments of the present disclosure, using a 10 mm diameter round-headed metal pressure rod to compress the above strengthened spinel glass ceramic with a thickness of 0.7 mm, the uniaxial compressive strength that this strengthened spinel glass ceramic can withstand is tested. The uniaxial compressive strength that this strengthened spinel glass ceramic can withstand is greater than 500 N, preferably greater than 550 N. This indicates that this strengthened spinel glass ceramic has good compression resistance performance and good pressure-bearing capacity.

The spinel glass ceramic according to any of the preceding embodiments of the present disclosure can be prepared by a method comprising, but not limited to, the following steps:
(1) Preparing the base glass: Based on mole percentage of oxides, performing batching according to the composition of the base glass or the composition of the spinel glass ceramic according to any of the preceding embodiments, mixing uniformly, and then preparing using conventional methods known in the art for preparing base glass. The methods for preparing the base glass here include, but are not limited to, float, overflow, rolling, casting, or continuous melting. The present disclosure does not limit the various parameters during the preparation process of the base glass, as long as the base glass with the performance required by the present disclosure can be obtained.
(2) Preparing the spinel glass ceramic: Subjecting the base glass obtained in step (1) to heat treatment. The heat treatment here includes, but is not limited to, one-step heat treatment or multi-step heat treatment, to obtain the spinel glass ceramic according to any of the preceding embodiments of the present disclosure. The present disclosure does not limit the various parameters during the preparation process, as long as the spinel glass ceramic with the performance required by the present disclosure can be obtained.

In some embodiments of the present disclosure, the preparation method of the base glass in step (1) above may include, but is not limited to, the following steps: performing batching according to the composition of the base glass or the composition of the spinel glass ceramic according to any of the preceding embodiments, mixing uniformly, then melting, forming, cooling, and annealing to obtain the base glass. The present disclosure does not particularly limit the temperature and time of melting, as long as each component can be fully melted. Preferably, the melting temperature is 1550°C to 1800°C, and the melting time is preferably 3 h to 12 h. The present disclosure does not limit the forming method, as long as the purpose of the present disclosure can be achieved. For example, it can be cast into a mold to form a glass brick. The present disclosure does not limit the cooling temperature, as long as the purpose of the present disclosure can be achieved. Preferably, the cooling temperature is 800°C to 1000°C. The present disclosure does not limit the annealing temperature and time, as long as the purpose of the present disclosure can be achieved. Preferably, the annealing temperature is 500°C to 700°C, and the time is 20 h to 26 h.

In some embodiments of the present disclosure, the heat treatment in step (2) above comprises nucleation treatment and crystallization treatment. Preferably, the temperature T₁ of the nucleation treatment is 600°C to 850°C, more preferably T₁ is 650°C to 850°C. In some embodiments, the temperature T₁ of the nucleation treatment can be 600°C, 625°C, 650°C, 675°C, 680°C, 690°C, 700°C, 710°C, 720°C, 725°C, 730°C, 740°C, 750°C, 775°C, 800°C, 825°C, or 850°C, or a numerical value within a numerical range formed with any two of the above values as endpoints, as long as the spinel glass ceramic with the performance required by the present disclosure can be obtained. Preferably, the nucleation treatment time t₁ is 0 h to 72 h, more preferably t₁ is 0 h to 24 h, even more preferably t₁ is 0 h to 8 h. In some embodiments, the nucleation treatment time t₁ can be 0 h, 1 h, 2 h, 3 h, 4 h, 5 h, 6 h, 7 h, 8 h, 16 h, 24 h, 32 h, 40 h, 48 h, 56 h, 64 h, or 72 h, or a numerical value within a numerical range formed with any two of the above values as endpoints, as long as the spinel glass ceramic with the performance required by the present disclosure can be obtained. Preferably, the temperature T₂ of the crystallization treatment is 700°C to 1000°C. In some embodiments, the temperature T₂ of the crystallization treatment can be 700°C, 710°C, 720°C, 730°C, 740°C, 750°C, 760°C, 770°C, 780°C, 790°C, 800°C, 810°C, 820°C, 830°C, 840°C, 850°C, 875°C, 900°C, 925°C, 950°C, 975°C, or 1000°C, or a numerical value within a numerical range formed with any two of the above values as endpoints, as long as the spinel glass ceramic with the performance required by the present disclosure can be obtained. Preferably, the crystallization treatment time t₂ is 10 min to 400 min, preferably t₂ is 10 min to 120 min. In some embodiments, the crystallization treatment time t₂ can be 10 min, 20 min, 30 min, 40 min, 50 min, 60 min, 70 min, 80 min, 90 min, 100 min, 110 min, 120 min, 150 min, 170 min, 200 min, 220 min, 250 min, 280 min, 300 min, 320 min, 350 min, 370 min, or 400 min, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In the present disclosure, when subjecting the base glass to heat treatment to prepare the spinel glass ceramic, one-step heat treatment can be performed, or two-step or multi-step heat treatment can be performed. If one-step heat treatment is performed, it means that nucleus formation treatment is not performed separately, one-step heating is performed directly, and nucleation and target crystal growth are carried out at the temperature reached during the one-step heating process. It can be understood as performing crystallization treatment directly. If two-step heat treatment is performed, it means that a two-step heating process is performed: nucleus formation treatment, i.e., nucleation treatment, is performed first, followed by target crystal growth treatment, i.e., crystallization treatment. If multi-step heat treatment is performed, then a stepwise heating method is used in the nucleation treatment stage and/or the crystallization treatment stage. That is, during the entire heat treatment process, multiple (more than two) heating steps are performed.

In the present disclosure, the nucleation treatment involves heating to the specified nucleation treatment temperature (also known as the nucleation temperature), and after reaching the nucleation treatment temperature, holding for a given time. This holding time is the nucleation treatment time (also known as the nucleation time). The crystallization treatment involves heating to the specified crystallization treatment temperature (also known as the crystallization temperature), and after reaching the crystallization treatment temperature, holding for a certain time. This holding time is the crystallization treatment time (also known as the crystallization time).

In some embodiments of the present disclosure, in step (2), when performing heat treatment, the heating rate is preferably controlled to be 5 K/min to 15 K/min, preferably 5 K/min to 10 K/min. In some embodiments, the heating rate can be 5 K/min, 6 K/min, 7 K/min, 8 K/min, 9 K/min, 10 K/min, 11 K/min, 12 K/min, 13 K/min, 14 K/min, or 15 K/min, or a numerical value within a numerical range formed with any two of the above values as endpoints, as long as the spinel glass ceramic with the performance required by the present disclosure can be obtained. It should be understood that in specific embodiments, any of the above ranges can be combined with any other range, as long as the spinel glass ceramic with the performance required by the present disclosure can be obtained.

In some embodiments of the present disclosure, the strengthened spinel glass ceramic according to any of the preceding embodiments can be prepared by subjecting the spinel glass ceramic prepared in step (2) above to chemical strengthening treatment.

In some embodiments of the present disclosure, the salt bath used for chemical strengthening treatment of the spinel glass ceramic is a molten salt comprising potassium salt and/or sodium salt. The potassium salt comprises one or more selected from the group consisting of potassium nitrate, potassium sulfate, and potassium carbonate, preferably potassium nitrate. The sodium salt comprises at least one selected from the group consisting of sodium nitrate, sodium sulfate, and sodium carbonate, preferably sodium nitrate. Preferably, the temperature T₃ of the salt bath used for chemical strengthening treatment is 380°C to 600°C, preferably T₃ is 400°C to 550°C, more preferably T₃ is 400°C to 500°C. In some embodiments, the temperature T₃ of the salt bath used for chemical strengthening treatment can be 380°C, 400°C, 425°C, 450°C, 475°C, 500°C, 525°C, 550°C, 575°C, or 600°C, or a numerical value within a numerical range formed with any two of the above values as endpoints, as long as the strengthened spinel glass ceramic with the performance required by the present disclosure can be obtained. Preferably, the time t₃ of the chemical strengthening treatment is 1 h to 48 h, preferably t₃ is 2 h to 24 h, more preferably t₃ is 2 h to 15 h. In some embodiments, the time t₃ of the chemical strengthening treatment can be 1 h, 4 h, 8 h, 12 h, 16 h, 20 h, 24 h, 28 h, 32 h, 36 h, 40 h, 44 h, or 48 h, or a numerical value within a numerical range formed with any two of the above values as endpoints, as long as the strengthened spinel glass ceramic with the performance required by the present disclosure can be obtained. It should be understood that in specific embodiments, any of the above ranges can be combined with any other range, as long as the strengthened spinel glass ceramic with the performance required by the present disclosure can be obtained. In some embodiments of the present disclosure, a given amount (for example, 0 wt% to 0.5 wt%) of lithium salt can be added to the salt bath. By adopting the above chemical strengthening treatment process scheme to strengthen the spinel glass ceramic with a specific composition and structure, a strengthened spinel glass ceramic with excellent surface stress characteristics and excellent deep-layer stress characteristics can be obtained, thereby ensuring that the obtained strengthened spinel glass ceramic has high mechanical strength and excellent damage resistance performance.

It should be understood that during chemical strengthening treatment, one-step chemical strengthening treatment can be performed, or two-step or multi-step chemical strengthening treatment can be performed. In the present disclosure, the temperature of the chemical strengthening treatment is the temperature of the salt bath; when the chemical strengthening treatment comprises two or more steps, the time of the chemical strengthening treatment is the sum of the time of each step of chemical strengthening treatment. In some embodiments of the present disclosure, when the chemical strengthening treatment comprises two or more steps, the temperature and time of each step of chemical strengthening treatment can be the same or different.

In the present disclosure, the stress distribution structure possessed by the strengthened spinel glass ceramic is closely related to the composition of the spinel glass ceramic (including oxide composition, crystalline phase composition), the composition of the salt bath, the temperature of the salt bath, and the time of chemical strengthening treatment. Only when a spinel glass ceramic with a specific composition is chemically strengthened in a suitable salt bath (suitable composition and suitable temperature) for a suitable time can the prepared strengthened spinel glass ceramic obtain a specific stress distribution structure, thereby achieving the excellent effects expected in the present disclosure.

In the present disclosure, the glass device with high strength can be prepared from the spinel glass ceramic according to any of the preceding embodiments. For example, the glass device can include, but is not limited to, work surfaces, other surfaces, appliance doors, floor tiles, wall panels, storage containers, mobile phone screens, mobile phone back panels, electronic apparatus frames, vehicle windshields, aircraft windshields, or vessel windshields, etc. The spinel glass ceramic provided by the present disclosure can obtain a high stress level after chemical strengthening treatment, thereby obtaining high mechanical strength and high damage resistance performance, especially excellent drop impact resistance performance. The glass device prepared using the spinel glass ceramic of the present disclosure after chemical strengthening can also be ensured to have excellent mechanical properties.

In the present disclosure, the spinel glass ceramic according to any of the preceding embodiments can be applied in electronic apparatuses.

In some embodiments of the present disclosure, the electronic apparatus comprises at least one selected from the group consisting of a mobile phone, a tablet computer, a smart wearable, a display, and a television. For example, the electronic apparatus can include, but is not limited to, a mobile phone, a tablet computer, a smart wearable, a display, or a television, etc. The smart wearable can include, but are not limited to, electronic watches, smart bracelets, smartwatches, smart glasses, etc. The display can include, but are not limited to, high-definition displays, vehicle-mounted displays, aviation-mounted displays, etc. For example, the electronic apparatus can comprise a housing and electronic components partially located within the housing. The housing comprises a front surface, a rear surface, and side surfaces. The electronic components comprise a display device, which is located at or adjacent to the front surface of the housing. The spinel glass ceramic provided by the present disclosure, after chemical strengthening, can be applied to the front surface and/or rear surface and/or side surfaces of the housing. In some embodiments, the front surface and/or rear surface of the housing can be of uniform thickness or non-uniform thickness. In some embodiments, the front surface and/or rear surface of the housing can be 2D, 2.5D, 3D, or irregularly shaped.

### Test Methods:

### 1. X-ray diffraction (XRD) test

The sample to be tested was crushed and ground into a sample with a particle size of less than 75 µm. The ground sample was tested using an X-ray diffractometer to obtain the XRD diffraction peak curve and XRD diffraction data. The XRD diffraction data were then analyzed using JADE Standard 8.6 software to obtain the crystalline phases of the sample. The X-ray diffractometer was Shimadzu XRD-6100, with 2θ = 10° to 80°, scanning speed of 6°/min, operating voltage of 40 kV, and operating current of 30 mA. The sample to be tested was the spinel glass ceramic or the strengthened spinel glass ceramic.

Average crystal size: Based on the result data obtained from the XRD test, the average crystal size of the sample can be calculated according to the Scherrer formula D=Kλ/(βcosθ). Where λ is the X-ray wavelength, λ=0.154056 nm, β is the full width at half maximum of the diffraction peak, K=0.89, and θ is the Bragg diffraction angle. Specifically, the RAW file (diffraction pattern) output by the XRD instrument was subjected to curve fitting in JADE Standard 8.6 software. Jade output a fitting report. According to the 2θ value and Peak FWHM value corresponding to each diffraction peak in the fitting report, and converting the Peak FWHM value to the radian system: β = (FWHM/180 × 3.14), the crystal size for each diffraction peak was calculated using the Scherrer formula D=Kλ/(βcosθ) and then averaged to obtain the average crystal size.

Average crystal size of the (Zn, Mg)Al₂O₄ crystalline phase: The RAW file (diffraction pattern) output by the XRD instrument was subjected to phase retrieval and curve fitting in JADE Standard 8.6 software. In the output fitting report, the 2θ values and Peak FWHM values corresponding to three diffraction peaks of the (Zn, Mg)Al₂O₄ crystalline phase within the 2θ angle ranges of 34° to 38°, 44° to 46°, and 64° to 67° were selected. The Peak FWHM values were converted to the radian system: β = (FWHM/180 × 3.14). The crystal sizes for the three diffraction peaks were calculated using the Scherrer formula D=Kλ/(βcosθ) and then averaged to obtain the average crystal size of the (Zn, Mg)Al₂O₄ crystalline phase. Where λ is the X-ray wavelength, λ=0.154056 nm, β is the full width at half maximum of the diffraction peak, K=0.89, and θ is the Bragg diffraction angle.

Crystalline phase content: The XRD test results (RAW format) were imported into JADE Standard 8.6 software for fitting and calculation to obtain the content of each crystalline phase in the glass ceramic, and then the total crystalline phase content in the glass ceramic was calculated. The ratio of the fitted peak area of a crystalline phase to the total fitted peak area is the crystalline phase content of that crystalline phase. The ratio of the fitted peak area of the (Zn, Mg)Al₂O₄ crystalline phase to the total fitted peak area is the crystalline phase content W_{[(Zn, Mg)Al2O4]} of the (Zn, Mg)Al₂O₄ crystalline phase; the ratio of the fitted peak area of the tetragonal ZrO₂ crystalline phase to the total fitted peak area is the crystalline phase content W_{[ZrO2]} of the tetragonal ZrO₂ crystalline phase. Based on W_{[(Zn, Mg)Al2O4]} and W_{[ZrO2]}, the ratio (mass ratio Z) of the (Zn, Mg)Al₂O₄ crystalline phase to the tetragonal ZrO₂ crystalline phase and the total crystalline phase content W were calculated.

Peak intensity ratio: The XRD test results (RAW format) were imported into JADE Standard 8.6 software, and the peak values were found to determine the 2θ position of the peak and the corresponding original intensity, and then the peak intensity ratio was calculated. Specifically, it is the peak intensity ratio X of the first characteristic peak to the second characteristic peak.

Full width at half maximum: The XRD test results (RAW format) were imported into JADE Standard 8.6 software for phase retrieval and curve fitting. In the output fitting report, the 2θ position of the peak, the corresponding crystal plane, the full width at half maximum, and the fitted intensity were obtained. The ratio was calculated based on the fitted intensity of the corresponding crystal plane.

Specifically, it comprises the fitted peak intensity I_{[400]} of the characteristic peak of [400] crystal plane, the fitted peak intensity I_{[311]} of the characteristic peak of [311] crystal plane, the fitted peak intensity I_{[440]} of the characteristic peak of [440] crystal plane, the full width at half maximum W_{[400]} of the characteristic peak of [400] crystal plane, the full width at half maximum W_{[311]} of the characteristic peak of [311] crystal plane, the full width at half maximum W_{[440]} of the characteristic peak of [440] crystal plane, I_{[400]}/I_{[311]} and I_{[440]}/I_{[311]}.

Considering the influence of noise on peak finding during the test, smoothing operations not exceeding three times can be performed on the XRD diffraction peak curve.

### 2. |CT_AV|, DOL_0, CS_50, and |CT_CV| test

The stress meter SLP-2000 was used for testing. The light source wavelength was 518 nm, SOC = 25.5 (nm/cm)/MPa, refractive index = 1.60, exposure time: 300 usec.

When testing surface CS_50, |CT_AV|, DOL_0, |CT_CV|, a conduction liquid needed to be dropped onto the stress meter first. Then the strengthened spinel glass ceramic sample to be tested was wiped clean and placed on the test path to test its stress value. The stress meter was SLP-2000, and the conduction liquid used had a refractive index of 1.51.

### 3. Thickness test

A micrometer was used to test the thickness of the spinel glass ceramic.

It should be understood that during chemical strengthening treatment, the degree of ion exchange in the thickness direction of the spinel glass ceramic changes in a gradient from the surface to the center. The total increment in the exchange amount (mass) of Na-K and/or Li-Na generally does not exceed 1% of the total mass of the sample. Therefore, the expansion effect in the thickness direction is extremely slight. That is, before and after chemical strengthening, the thickness change of the spinel glass ceramic is very small, and it can be approximately considered that the thickness is basically unchanged.

### 4. Optical performance test

The sample to be tested was cleaned in an ultrasonic cleaner. The cleaning conditions included: cleaning time: 10 min; cleaning agent used: detergent diluted 10 times; cleaning temperature: 55±10°C; cleaning frequency: 30±10 kHz. Then the transmittance of the sample to be tested at different wavelengths was tested using a haze meter, with reference to the standard "GB/T 7962.12-2010 Test methods for colorless optical glass Part 12: Spectral internal transmittance". The haze meter used in the present disclosure was the Konica Minolta spectrophotometer CM-3600A. The sample to be tested was the spinel glass ceramic or the strengthened spinel glass ceramic.

### 5. Vickers hardness HV test

A strengthened spinel glass ceramic sample with a clean surface free from visible scratches, pits, cracks, and other damage was selected as the specimen. The digital micro-Vickers hardness tester VTD405 (Beijing Wowei Technology Co., Ltd.) was used. According to the national standard GB/T 37900-2019 "Test method for hardness and fracture toughness of ultra-thin glass-Low load Vickers hardness indentation method", the Vickers hardness of the glass ceramic was tested. The load was 300 gf, the load time was 10 s, and the validity of the indentation complied with the national standard GB/T 16534-2009 "Test method for hardness of fine ceramics at room temperature". In the present disclosure, when testing Vickers hardness, a glass ceramic sample with dimensions of 50 mm × 50 mm × 0.7 mm was tested. Measurements were taken at three different positions on the same sample surface, and the average value was selected as the final test result.

### 6. Surface K₂O concentration content test

In the present disclosure, the surface K₂O concentration of the strengthened spinel glass ceramic was measured by X-ray fluorescence spectrometer (XRF). The equipment model used was (Thermo Scientific ARL PERFORM'X), with a target of Rh (rhodium), X-ray tube voltage of 40 kW, current of 60 mA, collimator of 0.15, crystal selection of LiF200, detector selection of FPC, test range of a 29 mm circle, analysis software of UniQuant standardless analysis, and the test method used the X_UQ method in the OXSAS analysis software. Specifically, the content of K element on the surface of the strengthened spinel glass ceramic was measured by X-ray fluorescence spectrometer (XRF), and then the surface K₂O concentration was calculated. The calculation method was: surface K₂O concentration = (surface K element content × relative molecular mass of K₂O) / (relative atomic mass of K element × 2). It should be understood that surface K element content = mass of K element / total mass of elements, and total mass of elements = total mass of oxides.

That is, the surface K₂O concentration of the strengthened spinel glass ceramic is the ratio of the mass of K₂O to the total mass of oxides. Among them, oxides include SiO₂, Al₂O₃, ZrO₂, Na₂O, K₂O, etc., which can be accurately tested by XRF, and do not include the content of oxides such as B₂O₃ that cannot be accurately tested by XRF. During XRF testing, standardless testing was used, and the concentration of elements with atomic number 6 and below or their oxides in the strengthened spinel glass ceramic was not tested. That is, when XRF tests the surface K₂O concentration of the strengthened spinel glass ceramic, the total mass of oxides measured does not include the mass of elements with atomic number 6 and below or their oxides in the strengthened spinel glass ceramic.

### 7. Average sandpaper drop resistance height test

The average sandpaper drop resistance height refers to: the sum of the sandpaper drop resistance height measured for each sample among multiple strengthened spinel glass ceramic samples from the same Example or the same Comparative Example, divided by the number of strengthened spinel glass ceramic samples, which can be used to characterize the drop damage resistance performance of the strengthened spinel glass ceramic. Ten identical strengthened spinel glass ceramic samples were taken for testing in each batch. The average sandpaper drop resistance height was: $\left〈h\right〉 n = \frac{1}{n} {\sum }_{i = 1}^{n} hi$ wherein, n is the number of strengthened spinel glass ceramic samples tested per batch, and hi is the sandpaper drop resistance height of a single sample tested.

Among them, the test method for the sandpaper drop resistance height of a single sample is as follows:
Step 1: 80-mesh sandpaper was attached to the lower surface of a 160g model machine, and the model machine was placed on a Lvtu LT-SKDL-CD type drop tester;
Step 2: The strengthened spinel glass ceramic sample to be tested, with dimensions of 50 mm × 50 mm × 0.7 mm, was placed directly below the model machine, so that the strengthened spinel glass ceramic sample faced the sandpaper. The model machine was made to impact and fall from a certain drop height, impacting the strengthened spinel glass ceramic sample located directly below it. If the strengthened spinel glass ceramic sample was not broken, the drop height of the model machine was increased according to a certain rule. For example, starting from a drop height of 0.4 m, the sample was subjected to one drop impact. If it was not broken, the height was increased by 0.1 m each time for another drop until the strengthened spinel glass ceramic sample broke;
Step 3: The drop height immediately before the strengthened spinel glass ceramic sample broke was recorded as the sandpaper drop resistance height. For example, if the drop height was increased by 0.1 m each time, and the drop height at breakage was 0.5 m, then the sandpaper drop resistance height of the sample was 0.4 m.

### 8. Density

In the present disclosure, the density of the strengthened spinel was tested using the electronic density balance SD-200L from ALFA MIRAGE, Japan. The testing principle is the "Archimedes drainage method".

### 9. Fracture toughness test

The test was conducted according to the national standard GB/T 37900-2019 "Test method for hardness and fracture toughness of ultra-thin glass-Low load Vickers hardness indentation method". Specifically, indentations were prepared using the same method as for measuring Vickers hardness. The crack lengths 2C₁ and 2C₂ in the diagonal directions of the indentation were measured, and their maximum value must not exceed the thickness of the strengthened spinel glass ceramic. At least five effective indentation morphologies were measured on the surface of one sample, and their average value was calculated as the final result value for that sample.

The formula for calculating indentation fracture toughness is: $IFR = 0.026 \left[E⋅\frac{F}{\frac{\left(2{C}_{1}+2{C}_{2}\right)}{4}}\right] ⋅ \frac{{d}_{1} + {d}_{2}}{2 {C}_{1} + 2 {C}_{2}}$ wherein, IFR: indentation fracture toughness, unit is megapascal square root meter (MPa·m^{1/2}); E: elastic modulus of the specimen, unit is gigapascal (GPa); 2C₁, 2C₂: crack propagation length in the diagonal direction of the indentation, unit is millimeter (mm); d₁, d₂: diagonal length of the indentation, unit is millimeter (mm); F: test load value, unit is newton (N).

In the above test methods, after shaping, cutting, and polishing the strengthened spinel glass ceramic bricks from the Examples and Comparative Examples, strengthened spinel glass ceramic samples with desired dimensions (e.g., polished sheets) could be obtained for testing, such as glass ceramic polished sheets with dimensions of 50 mm × 50 mm × 0.7 mm.

### 10. Uniaxial compressive strength test

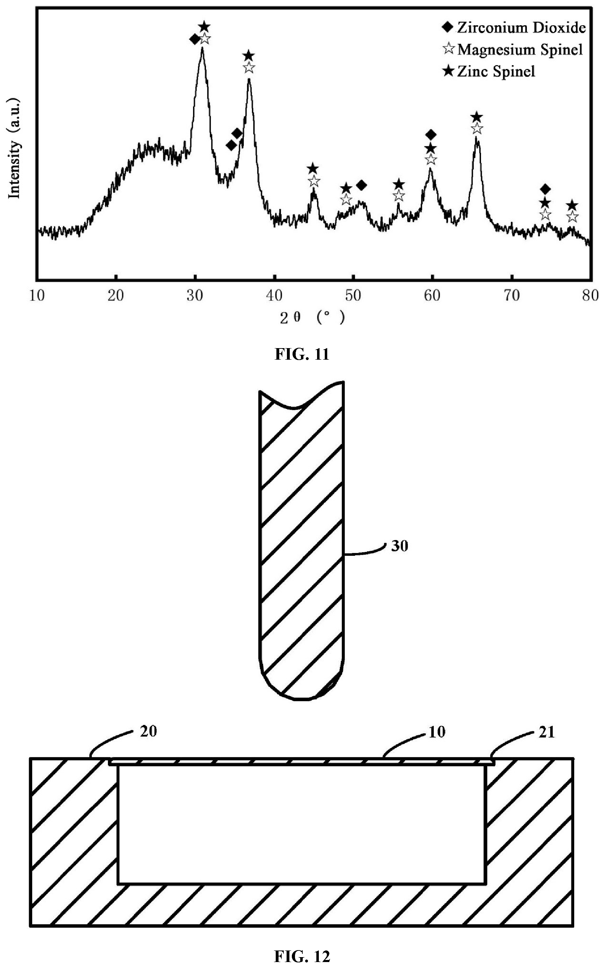

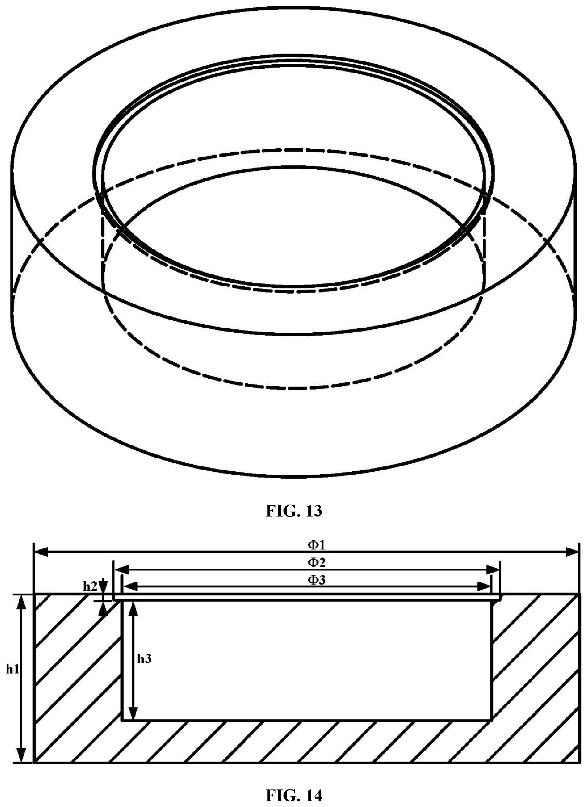

As shown in FIG. 12, the circular glass ceramic sample 10 to be tested, with a diameter of 46 mm and a thickness of 0.7 mm, was placed in the sample recess 21 of the customized holder 20 (as shown in Figs. 13 and 14), and then placed on the bottom ring (not shown in the figure) of the tensile testing machine (LT-850A). The testing software was started, and the movement speed of the pressure rod 30 (rod diameter 10 mm, ball head diameter 10 mm) was set to 10 mm/min. The start test button was clicked, and the pressure rod 30 applied force to the center of the glass ceramic sample 10 to be tested at the set movement speed until the glass ceramic sample 10 to be tested broke.

The testing software automatically read the force (N) at the moment the glass ceramic sample broke, which was recorded as the test result. Ten glass ceramic samples in the same state were tested, and the average of the test results was taken and recorded as the uniaxial compressive strength that the glass ceramic sample to be tested could withstand.

The customized holder in this test method is a cylindrical holder with a diameter of 65 mm and a height of 20 mm. The specific structure of this customized holder is shown in Figs. 13 and 14, where Φ1 = 65 mm, Φ2 = 46.02 mm, Φ3 = 44 mm, h1 = 20 mm, h2 = the thickness of the strengthened spinel glass ceramic sample to be tested, and h3 = 15 mm. The height of the sample recess 21 inside the holder is equal to the thickness of the strengthened spinel glass ceramic sample to be tested. The strengthened spinel glass ceramic sample to be tested could just fit into the holder. The stepped blind hole set inside the customized holder for placing the sample for testing shares the same axis with the customized holder. The holder material is acrylic.

### Example 1

### <Preparation of base glass>

Batching was performed according to the glass production raw material formula converted from formula 1 in Table 1. The total mass of the prepared raw materials was 1000 g. They were then mixed in a V-type mixer for 30 min. After mixing, 5 g of the clarifying agent NaCl was added. The mixture was then transferred to a platinum crucible and melted in a lift furnace (model: SJF1750, manufacturer: Nanjing Boyuntong Instrument Technology Co., Ltd.) at 1650°C for 5 h. The melt was then poured into a preheated stainless steel mold at 300°C for forming and cooling. It was cooled to 900°C and then placed in an annealing furnace at 600°C for annealing for 24 h. After that, it was cooled with the furnace to room temperature to obtain the base glass.

### <Preparation of spinel glass ceramic>

The base glass prepared above was subjected to heat treatment in a resistance furnace (equipment model: SLX1400-40, manufacturer: Shanghai Shengli Testing Instrument Co., Ltd.) to obtain the spinel glass ceramic. Based on mole percentage of oxides, the composition of the prepared spinel glass ceramic was the same as that of the base glass, as detailed in Table 1.

Specifically, a two-step heat treatment process was adopted. First, the temperature was raised to the nucleation treatment temperature for nucleation treatment, and then the temperature was raised to the crystallization treatment temperature for crystallization treatment. The heating rate during nucleation treatment and crystallization was 10 K/min. Among them, the nucleation treatment temperature T₁ was 740°C, and the nucleation treatment time t₁ was 480 min; the crystallization treatment temperature T₂ was 800°C, and the crystallization treatment time t₂ was 10 min.

As needed, the spinel glass ceramic was sequentially subjected to cutting, CNC machining (computer numerical control, i.e., numerically controlled machine tool; the CNC instrument equipment model used in the present disclosure is: RCG500S), and polishing to obtain smooth spinel glass ceramic sheets of the required specifications. In the present disclosure, the processed spinel glass ceramic sheets had specifications of 50 mm × 50 mm × 0.7 mm, and circular samples with a diameter of 46 mm and a thickness of 0.7 mm.

### <Preparation of strengthened spinel glass ceramic>

The spinel glass ceramic was placed in a 100 wt% NaNO₃ salt bath at 450°C for the first-step strengthening treatment for 3 hours, and then placed in a 100 wt% KNO₃ salt bath at 430°C for the second-step strengthening treatment for 2 hours to obtain the strengthened spinel glass ceramic.

### Examples 2 to 11

Except that the relevant preparation parameters were adjusted according to Table 2, the rest was the same as in Example 1. The corresponding formulas in Table 2 are detailed in Table 1.

### Examples 12 to 14

Except that the corresponding spinel glass ceramics were placed in a 100 wt% NaNO₃ salt bath at 450°C for 4 h to obtain the corresponding strengthened spinel glass ceramics according to Table 5, the rest was the same as in Example 1.

### Examples 15 to 17

Except that the corresponding spinel glass ceramics were placed in a 100 wt% KNO₃ salt bath at 430°C for 4 hours to obtain the corresponding strengthened spinel glass ceramics according to Table 6, the rest was the same as in Example 1.

### Comparative Examples 1 to 11

Except that the relevant preparation parameters were adjusted according to Table 2, the rest was the same as in Example 1. The corresponding formulas in Table 2 are detailed in Table 1.

### Comparative Examples 12 to 15

Except that the corresponding spinel glass ceramics were placed in a 100 wt% NaNO₃ salt bath at 450°C for 4 hours to obtain the corresponding strengthened spinel glass ceramics according to Table 5, the rest was the same as in Example 1.

### Comparative Examples 16 to 19

Except that the corresponding spinel glass ceramics were placed in a 100 wt% KNO₃ salt bath at 430°C for 4 hours to obtain the corresponding strengthened spinel glass ceramics according to Table 6, the rest was the same as in Example 1.

The formulas of each Example and Comparative Example are shown in Table 1, and the preparation parameters and performance tests of each Example and Comparative Example are shown in Tables 2 to 6.

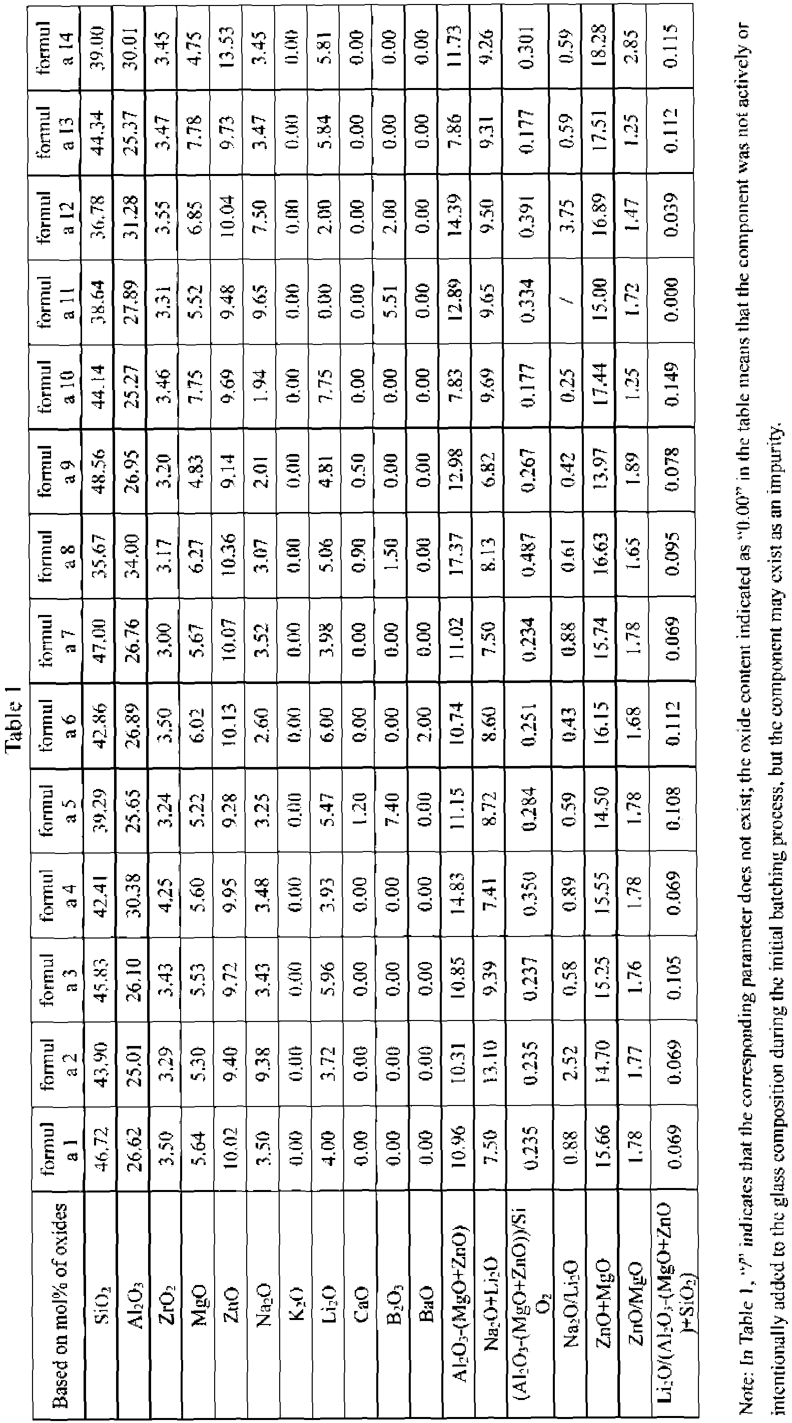

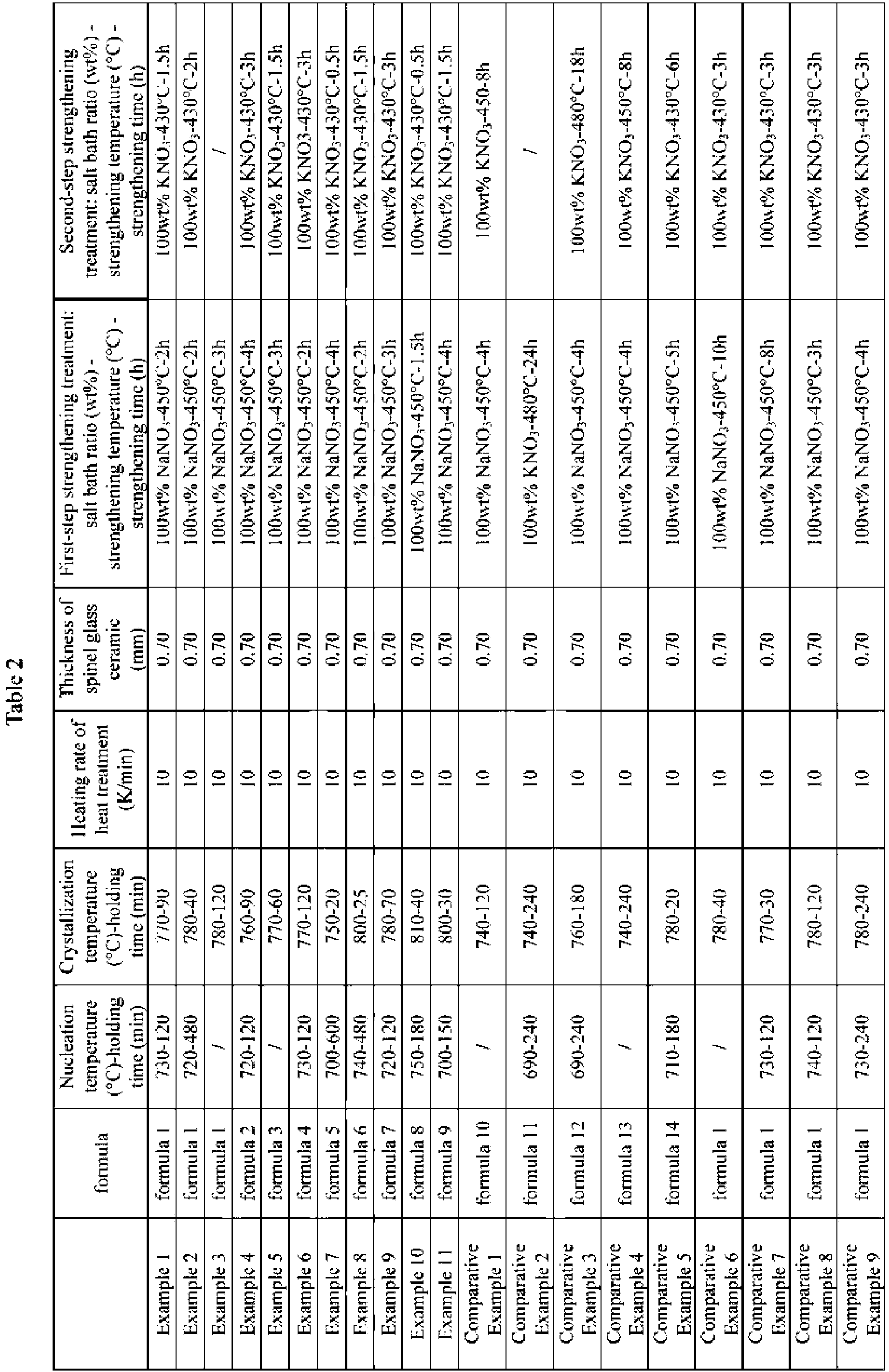

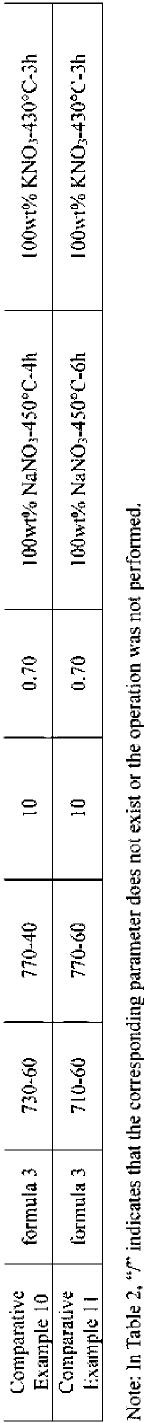

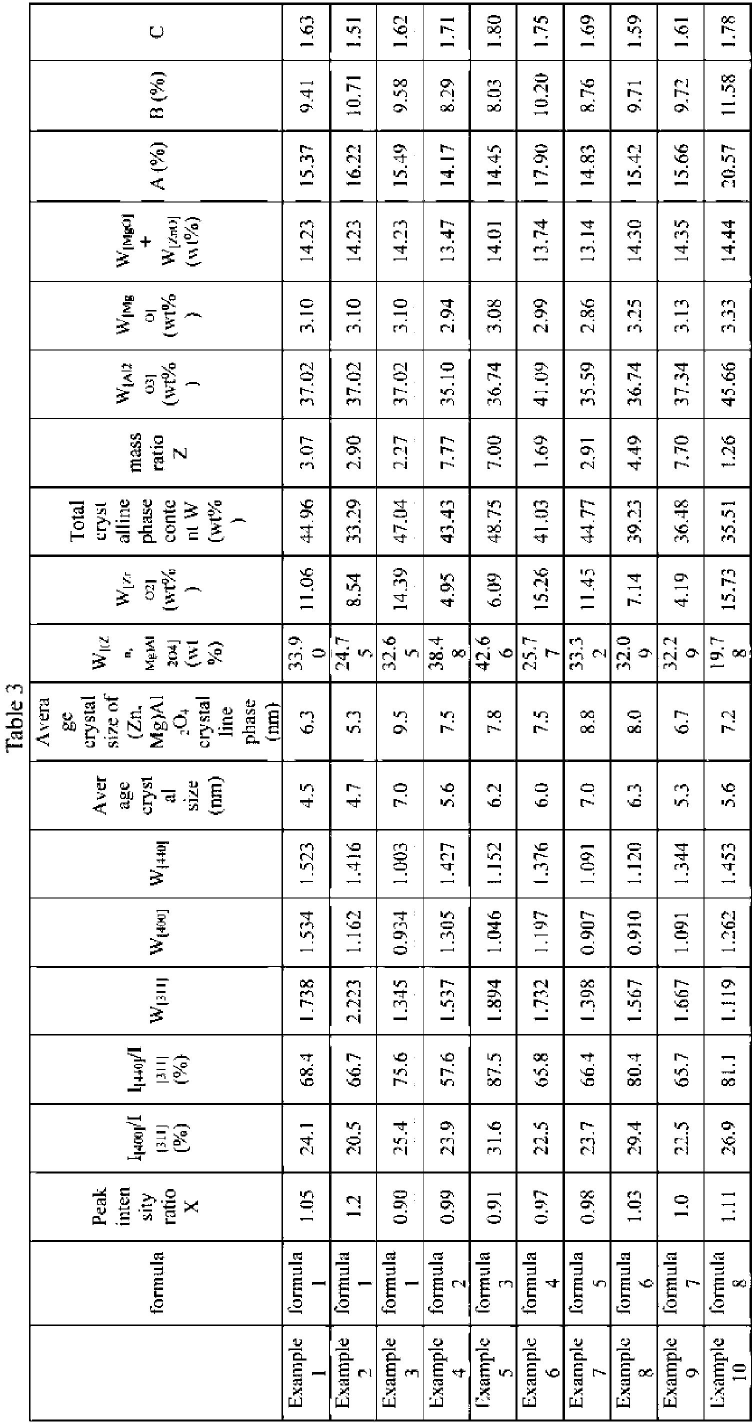

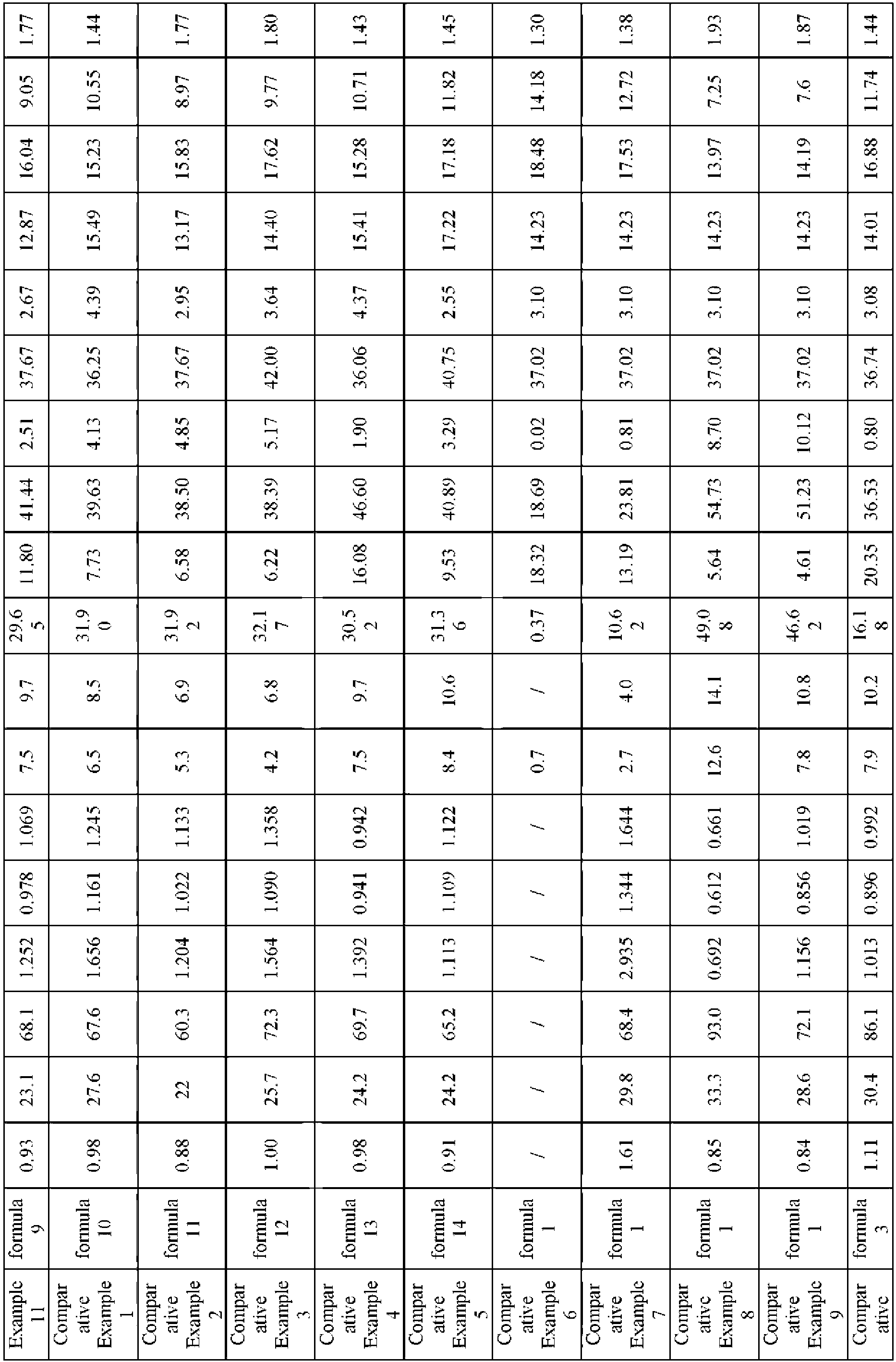

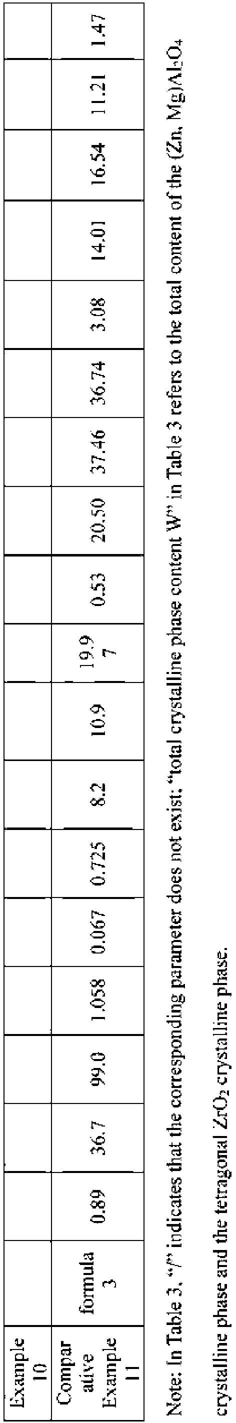

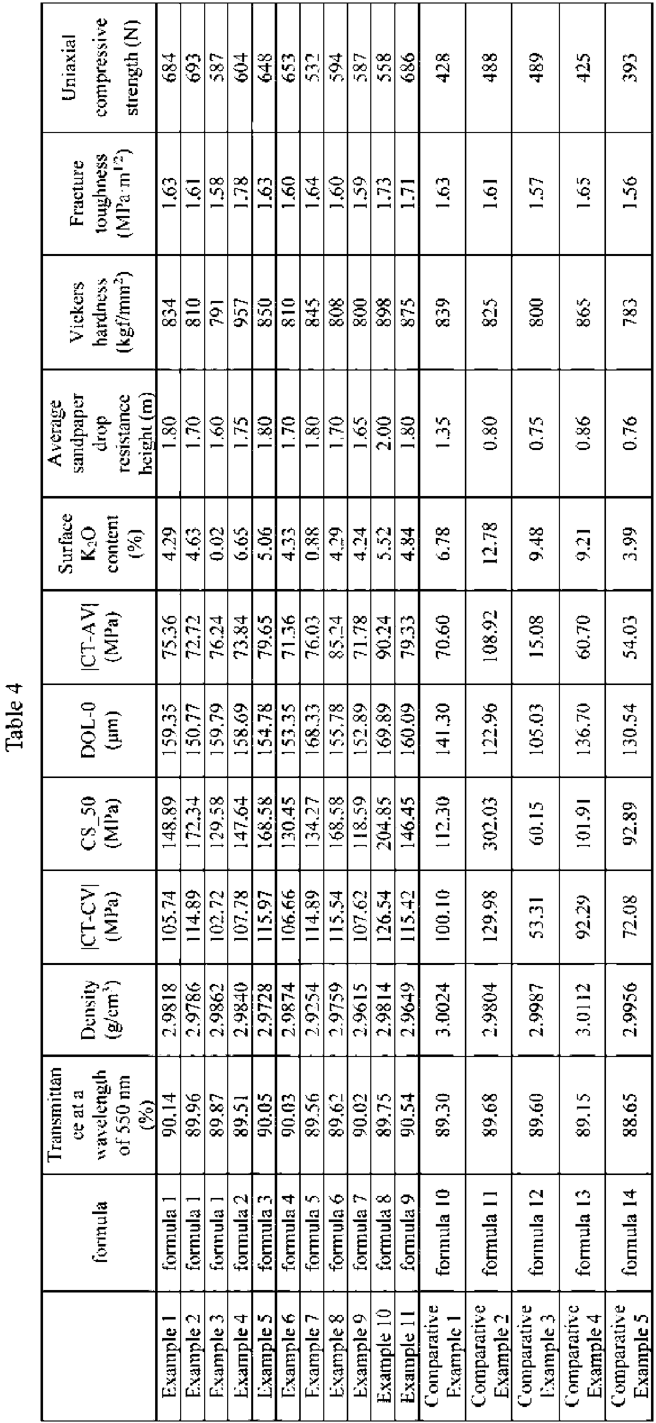

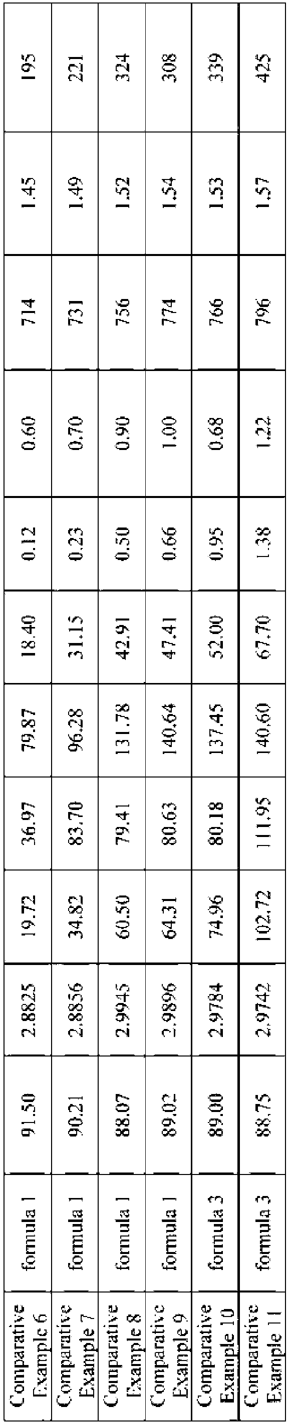

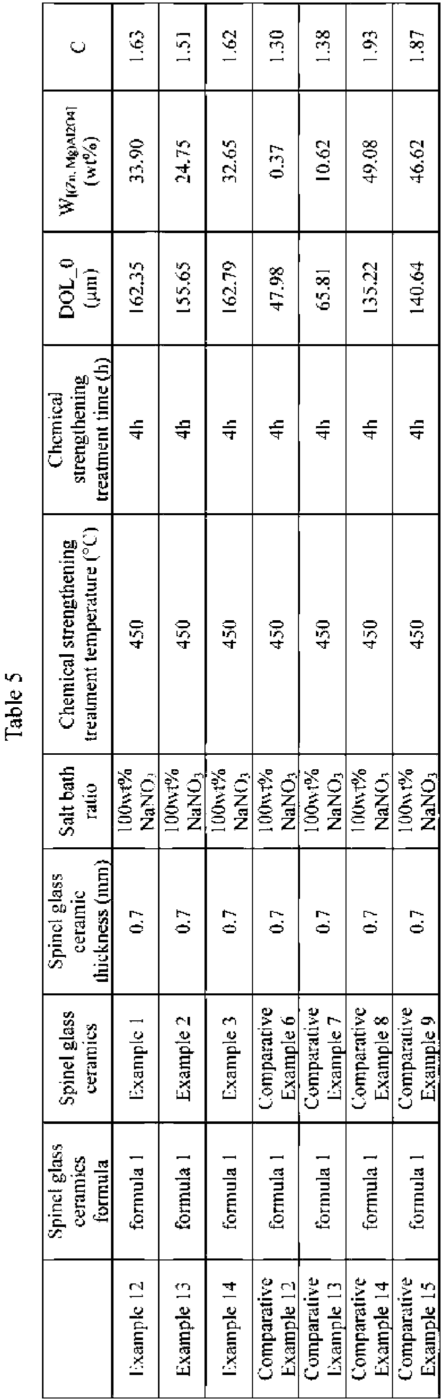

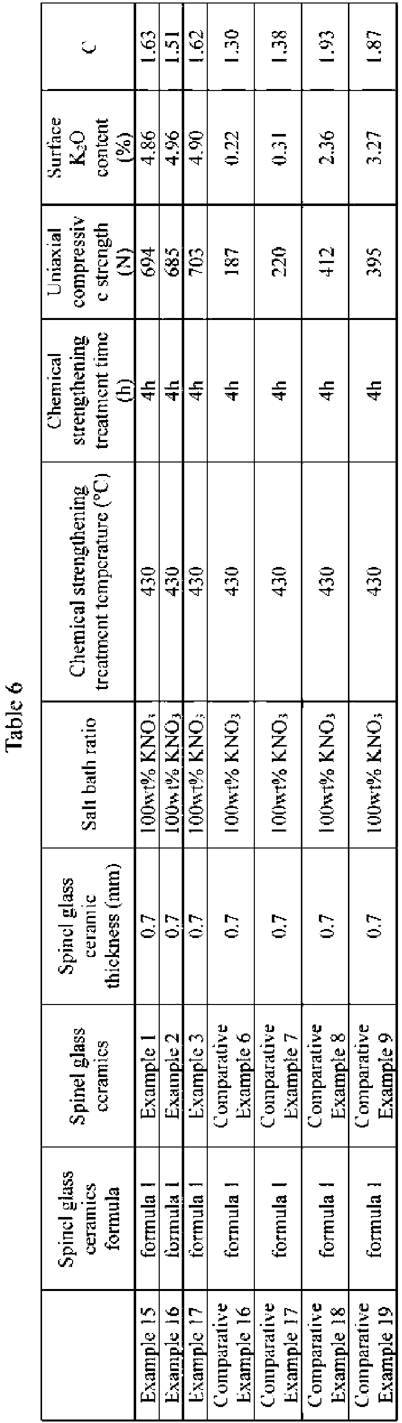

According to the tests, the spinel glass ceramics in Examples 1 to 11 and Comparative Examples 1 to 11 all comprise the main crystalline phase of (Zn, Mg)Al₂O₄ crystalline phase and the secondary crystalline phase of tetragonal ZrO₂ crystalline phase. The XRD patterns of some Examples and Comparative Examples are shown in Figs. 2 to 7, FIG. 9, and FIG. 11.

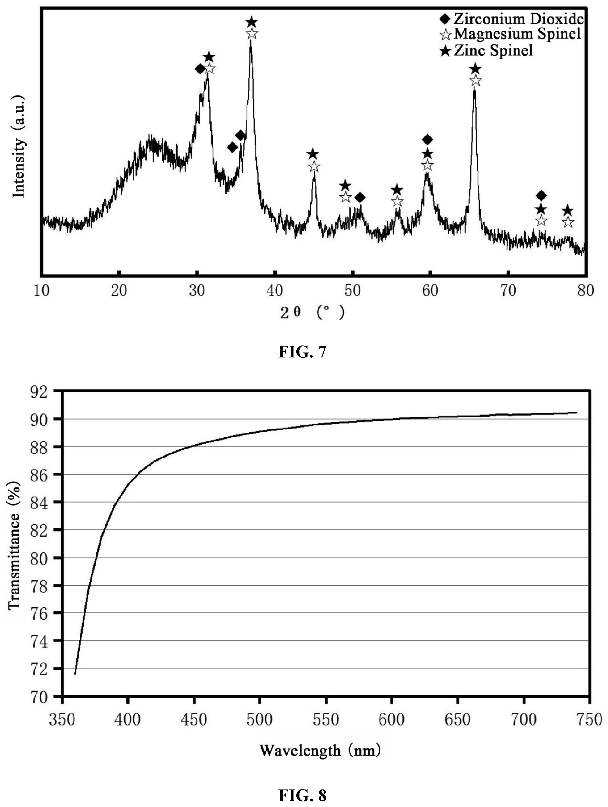

Referring to Tables 1 to 4, the composition and structure of the spinel glass ceramics in Examples 1 to 11 are all within the scope of the technical solution of the present disclosure, while the composition and structure of the spinel glass ceramics in Comparative Examples 1 to 11 do not fully meet the requirements of the solution of the present disclosure. Using the spinel glass ceramics in the Examples of the present disclosure for chemical strengthening can achieve a stress level significantly superior to that of the Comparative Examples. For example, the spinel glass ceramics of the present disclosure can be chemically strengthened to obtain chemically strengthened spinel glass ceramics with a higher depth of the compressive stress layer and larger CT, etc. Tests show that the chemically strengthened spinel glass ceramics obtained by chemically strengthening the spinel glass ceramics of the present disclosure have better drop damage resistance performance, can withstand higher uniaxial compressive strength, have better compression resistance performance, higher mechanical strength, and simultaneously have excellent light transmittance. Specifically, as shown in FIG. 8, the spinel glass ceramic in Example 1 has a transmittance of over 80.00% to visible light, so the obtained strengthened spinel glass ceramic is transparent within the visible light range.

Examples 1 to 3 and Comparative Examples 6 to 9 all obtained spinel glass ceramics by applying different heat treatment systems to base glasses with the composition of formula 1. Their XRD diffraction patterns are shown in FIG. 2.

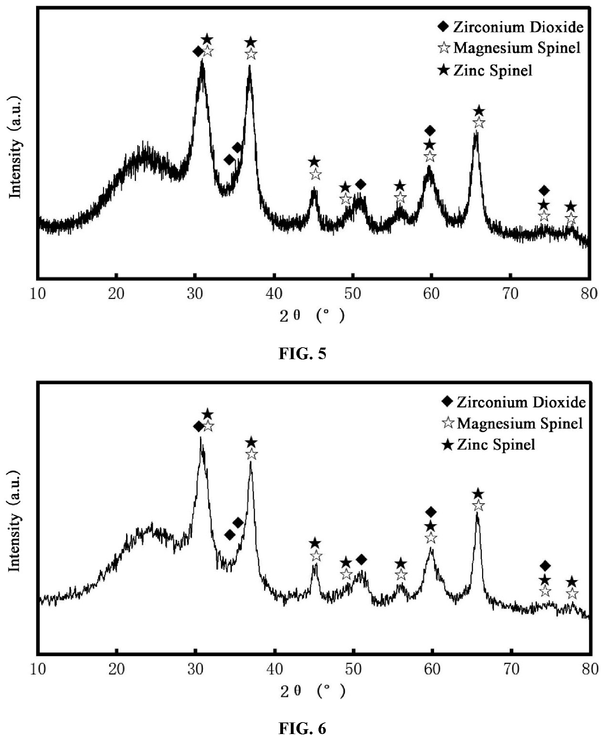

Referring to FIG. 2, FIG. 5, and Table 3, in the XRD pattern of the spinel glass ceramic of Example 1, there is a first characteristic peak within the 2θ angle range of 28° to 32° and a second characteristic peak within the 2θ angle range of 36° to 38°, with a peak intensity ratio X of 1.05.

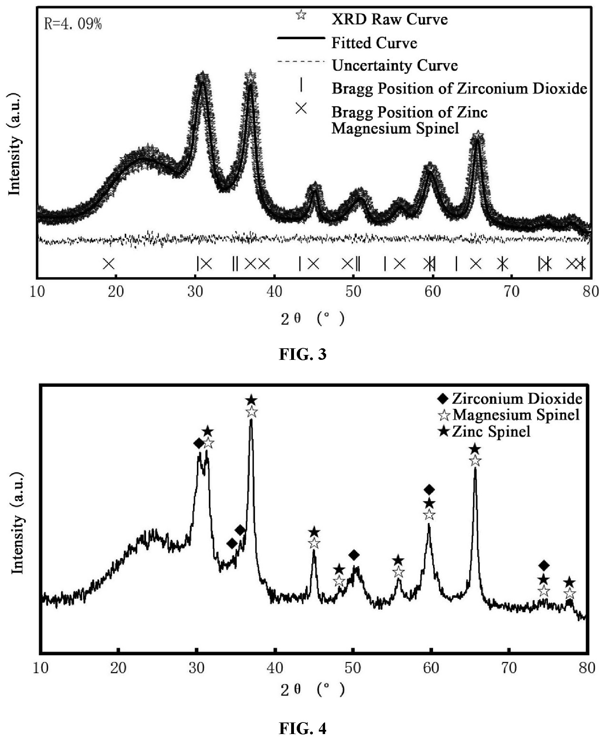

Referring to FIG. 2 and Table 3, in the XRD pattern of the spinel glass ceramic of Comparative Example 6, there is no second characteristic peak within the 2θ angle range of 36° to 38°; therefore, it does not have a peak intensity ratio X. In the spinel glass ceramic of Comparative Example 6, the (Zn, Mg)Al₂O₄ crystalline phase content is relatively low, and the calculation result of formula C does not meet the scope of the present disclosure scheme. The stress level of the strengthened spinel glass ceramic produced in Comparative Example 6 is relatively low. Referring to FIG. 2 and Table 3, the peak intensity ratio X of the XRD pattern of the spinel glass ceramic of Comparative Example 7 is 1.61. In the spinel glass ceramic of Comparative Example 7, the (Zn, Mg)Al₂O₄ crystalline phase content is also relatively low, the full width at half maximum of characteristic peaks of some crystal plane does not meet the requirements of the present disclosure, and the calculation result of formula C also does not meet the scope of the present disclosure scheme. The stress level of the strengthened spinel glass ceramic produced in Comparative Example 7 is also relatively low. Referring to FIG. 2 and FIG. 4, in the XRD pattern of the spinel glass ceramic of Comparative Example 8, peak splitting appears within the 2θ angle range of 28° to 32°. In the spinel glass ceramic of Comparative Example 8, the (Zn, Mg)Al₂O₄ crystalline phase content is relatively high, the average crystal size of the (Zn, Mg)Al₂O₄ crystalline phase is relatively high, the full width at half maximum of the characteristic peaks of crystal plane does not meet the requirements of the present disclosure, and the calculation result of formula C also does not meet the scope of the present disclosure scheme. The stress level of the strengthened spinel glass ceramic produced in Comparative Example 8 is relatively low. Referring to FIG. 2, in the XRD pattern of the spinel glass ceramic of Comparative Example 9, peak splitting appears within the 2θ angle range of 28° to 32°. In the spinel glass ceramic of Comparative Example 9, the (Zn, Mg)Al₂O₄ crystalline phase content is also relatively high, the average crystal size of the (Zn, Mg)Al₂O₄ crystalline phase is also relatively high, and the calculation result of formula C also does not meet the scope of the present disclosure scheme. The stress level of the strengthened spinel glass ceramic produced in Comparative Example 9 is also relatively low.

FIG. 3 is the refinement diagram of the XRD pattern of the spinel glass ceramic of Example 6 in Jade software. In the figure: "XRD Raw Curve" is drawn using the original data obtained from Shimadzu XRD-6100, "Fitted Curve" is drawn using the fitted data output after curve fitting the RAW file obtained from Shimadzu XRD-6100 in Jade software, "Uncertainty Curve" is drawn using the difference between the XRD original data and its fitted data output by Jade software, "Bragg Position of Zirconium Dioxide" is the peak position of the zirconium dioxide standard card matched by the XRD original data in Jade, and "Bragg Position of Zinc Magnesium Spinel" is the peak position of the zinc magnesium spinel standard card matched by the XRD original data in Jade.

Referring to FIG. 3 and Table 3, in the XRD pattern of the spinel glass ceramic of Example 6, there is a first characteristic peak within the 2θ angle range of 28° to 32° and a second characteristic peak within the 2θ angle range of 36° to 38°, with a peak intensity ratio X of 0.97.

Comparative Examples 10 and 11 both obtained spinel glass ceramics by applying different heat treatment systems to base glasses with the composition of formula 3. Their XRD diffraction patterns are shown in Figs. 6 and 7.

In the XRD pattern of the spinel glass ceramic of Comparative Example 10, as shown in FIG. 6, peak splitting appears within the 2θ angle range of 28° to 32°. In the spinel glass ceramic of Comparative Example 10, the average crystal size of the (Zn, Mg)Al₂O₄ crystalline phase is relatively high, and the calculation result of formula C also does not meet the scope of the present disclosure scheme. The stress level of the strengthened spinel glass ceramic produced in Comparative Example 10 is relatively low. In the XRD pattern of the spinel glass ceramic of Comparative Example 11, as shown in FIG. 7, there is a trend of peak splitting within the 2θ angle range of 28° to 32°. In the spinel glass ceramic of Comparative Example 11, the average crystal size of the (Zn, Mg)Al₂O₄ crystalline phase is also relatively high, the full width at half maximum of characteristic peaks of some crystal plane does not meet the requirements of the present disclosure, and the calculation result of formula C also does not meet the scope of the present disclosure scheme. The stress level of the strengthened spinel glass ceramic produced in Comparative Example 11 is also relatively low.

Comparative Examples 12 to 15 and Examples 12 to 14 obtained spinel glass ceramics by applying different heat treatment systems to base glasses with the composition of formula 1. Using the same chemical strengthening treatment conditions, chemically strengthened spinel glass ceramics were obtained. The depth of the compressive stress layer DOL_0 of Comparative Examples 12 to 15 is significantly lower than that of the Example solutions of the present disclosure, and the drop damage resistance height measured under 80-mesh sandpaper conditions is also significantly lower than that of the technical solutions of the present disclosure.

Comparative Examples 16 to 19 and Examples 15 to 17 obtained spinel glass ceramics by applying different heat treatment systems to base glasses with the composition of formula 1. Using the same chemical strengthening treatment conditions, chemically strengthened spinel glass ceramics were obtained. The uniaxial compressive strength that the chemically strengthened spinel glass ceramics of Comparative Examples 16 to 19 can withstand is significantly lower than that of the Example solutions of the present disclosure, and the surface K₂O content is also significantly lower than that of the Example solutions of the present disclosure.

It should be noted that in this text, the terms "comprise", "include" or any other variations thereof are intended to cover non-exclusive inclusion, so that a process, method, article, or device that includes a series of elements not only includes those elements but also includes other elements not explicitly listed, or also includes elements inherent to such process, method, article, or device.

Each example in this specification is described in a related manner, and the same or similar parts among the examples can be referred to each other. Each example focuses on describing the differences from other examples.

The above descriptions are only preferable examples of the present disclosure and are not intended to limit the present disclosure. Any modifications, equivalent replacements, improvements, etc., made within the spirit and principles of the present disclosure shall be included within the protection scope of the present disclosure.

## Claims

1. A spinel glass ceramic, wherein a composition of the spinel glass ceramic comprises: SiO₂ 35.00 mol% to 60.00 mol%, Al₂O₃ 20.00 mol% to 40.00 mol%, ZrO₂ 2.00 mol% to 8.00 mol%, MgO 3.00 mol% to 7.50 mol%, ZnO 7.00 mol% to 13.00 mol%, Na₂O 1.00 mol% to 10.00 mol%, and Li₂O 2.50 mol% to 10.00 mol%, based on a mole percentage of oxides;
the spinel glass ceramic comprises 15.00 wt% to 45.00 wt% of a (Zn, Mg)Al₂O₄ crystalline phase based on the spinel glass ceramic;
where W_{[(Zn, Mg)Al2O4]} is a weight percentage of the (Zn, Mg)Al₂O₄ crystalline phase based on the spinel glass ceramic, W_{[Al2O3]} is a weight percentage of Al₂O₃ based on the spinel glass ceramic, W_{[MgO]} is a weight percentage of MgO based on the spinel glass ceramic, W_{[ZnO]} is a weight percentage of ZnO based on the spinel glass ceramic; $A = \left(1-{W}_{\left[\left(Zn, Mg\right)Al2O4\right]}/2\right) \times {W}_{\left[Al2O3\right]} / 2 ,$ $B = \left(1-{W}_{\left[\left(Zn, Mg\right)Al2O4\right]}\right) \times \left({W}_{\left[MgO\right]}+{W}_{\left[ZnO\right]}\right) ,$ $C = A / B , and in the spinel glass ceramic , 1.50 \leq C \leq 1.85 .$

2. The spinel glass ceramic according to claim 1, wherein in the spinel glass ceramic, a value of A is 10.00% to 25.00%, preferably 14.00% to 25.00%; and/or, a value of B is 7.50% to 12.50%, preferably 8.00% to 12.00%.

3. The spinel glass ceramic according to claim 1 or 2, wherein the spinel glass ceramic further comprises a tetragonal ZrO₂ crystalline phase, and a total content of the (Zn, Mg)Al₂O₄ crystalline phase and the tetragonal ZrO₂ crystalline phase accounts for 25.00 wt% to 70.00 wt% of the spinel glass ceramic, preferably accounts for 30.00 wt% to 50.00 wt% of the spinel glass ceramic.

4. The spinel glass ceramic according to any one of claims 1 to 3, wherein in the spinel glass ceramic, a ratio of the (Zn, Mg)Al₂O₄ crystalline phase to the tetragonal ZrO₂ crystalline phase is 1.00 to 18.00, preferably 1.00 to 15.00.

5. The spinel glass ceramic according to any one of claims 1 to 4, wherein in the spinel glass ceramic, an average crystal size of the (Zn, Mg)Al₂O₄ crystalline phase is 3.0 nm to 10.0 nm, preferably 4.0 nm to 8.0 nm, more preferably 4.0 nm to 7.5 nm.

6. The spinel glass ceramic according to any one of claims 1 to 5, wherein the composition of the spinel glass ceramic further comprises: K₂O 0.00 mol% to 5.00 mol%, CaO 0.00 mol% to 10.00 mol%, B₂O₃ 0.00 mol% to 10.00 mol%, and BaO 0.00 mol% to 5.00 mol%, based on the mole percentage of oxides.

7. The spinel glass ceramic according to any one of claims 1 to 6, wherein the composition of the spinel glass ceramic comprises: SiO₂ 35.00 mol% to 60.00 mol%, Al₂O₃ 20.00 mol% to 40.00 mol%, ZrO₂ 2.00 mol% to 8.00 mol%, MgO 4.00 mol% to 7.00 mol%, ZnO 9.00 mol% to 12.00 mol%, Na₂O 2.00 mol% to 10.00 mol%, and Li₂O 3.00 mol% to 10.00 mol%, based on the mole percentage of oxides.

8. The spinel glass ceramic according to any one of claims 1 to 7, wherein the composition of the spinel glass ceramic comprises: SiO₂ 35.00 mol% to 50.00 mol%, Al₂O₃ 25.00 mol% to 35.00 mol%, ZrO₂ 3.00 mol% to 5.00 mol%, MgO 4.00 mol% to 7.00 mol%, ZnO 9.00 mol% to 12.00 mol%, Na₂O 2.00 mol% to 10.00 mol%, and Li₂O 3.00 mol% to 10.00 mol%, based on the mole percentage of oxides.

9. The spinel glass ceramic according to any one of claims 1 to 8, wherein the composition of the spinel glass ceramic satisfies: $1.30 \leq ZnO / MgO \leq 2.50 ;$ and/or, $0.05 \leq {Li}_{2} O / \left({Al}_{2}{O}_{3}-\left(MgO+ZnO\right)+{SiO}_{2}\right) \leq 0.20 ;$ and/or, $0.19 \leq \left({Al}_{2}{O}_{3}-\left(MgO+ZnO\right)\right) / {SiO}_{2} \leq 0.60 ;$ and/or, $0.26 \leq {Na}_{2} {O / Li}_{2} O \leq 3.00 ,$ based on the mole percentage of each oxide in the composition of the spinel glass ceramic.

10. The spinel glass ceramic according to any one of claims 1 to 9, wherein the composition of the spinel glass ceramic further satisfies:
12.00 mol% ≤ ZnO+MgO ≤ 20.00 mol%, preferably, 13.00 mol% ≤ ZnO+MgO ≤ 17.30 mol%; and/or,
9.00 mol% ≤ Al₂O₃-(MgO+ZnO) ≤ 22.00 mol%, preferably, 10.00 mol% ≤ Al₂O₃-(MgO+ZnO) ≤ 20.00 mol%; and/or,
5.00 mol% ≤ Na₂O+Li₂O ≤ 15.00 mol%, preferably, 6.00 mol% ≤ Na₂O+Li₂O ≤ 13.50 mol%,
based on the mole percentage of each oxide in the composition of the spinel glass ceramic.

11. The spinel glass ceramic according to any one of claims 1 to 10, wherein the spinel glass ceramic is transparent within the visible light range.

12. The spinel glass ceramic according to any one of claims 1 to 11, wherein a transmittance of the spinel glass ceramic with a thickness of 0.7 mm at a wavelength of 550 nm is greater than or equal to 85%.

13. The spinel glass ceramic according to any one of claims 1 to 12, wherein in an X-ray diffraction pattern of the spinel glass ceramic, a peak with a maximum peak intensity among characteristic peaks within the 2θ angle range of 28° to 32° is a first characteristic peak, and a peak with a maximum peak intensity among characteristic peaks within the 2θ angle range of 36° to 38° is a second characteristic peak, a peak intensity ratio X of the first characteristic peak to the second characteristic peak is 0.80 to 1.50, preferably the peak intensity ratio X is 0.85 to 1.30.

14. The spinel glass ceramic according to any one of claims 1 to 13, wherein in the X-ray diffraction pattern of the spinel glass ceramic, a characteristic peak of [400] crystal plane of the (Zn, Mg)Al₂O₄ crystalline phase is located within the 2θ angle range of 44° to 46°, a characteristic peak of [311] crystal plane of the (Zn, Mg)Al₂O₄ crystalline phase is located within the 2θ angle range of 34° to 38°, and a characteristic peak of [440] crystal plane of the (Zn, Mg)Al₂O₄ crystalline phase is located within the 2θ angle range of 64° to 67°;
a full width at half maximum W_{[400]} of the characteristic peak of [400] crystal plane is 0.650° to 1.800°, preferably W_{[400]} is 0.900° to 1.600°;
a full width at half maximum W_{[311]} of the characteristic peak of [311] crystal plane is 0.900° to 2.800°, preferably W_{[311]} is 1.100° to 2.230°;
a full width at half maximum W_{[440]} of the characteristic peak of [440] crystal plane is 0.750° to 2.000°, preferably W_{[440]} is 0.900° to 1.600°.

15. A strengthened spinel glass ceramic, wherein the strengthened glass ceramic comprises a compressive stress layer and a tensile stress layer, and a composition at a center of the strengthened spinel glass ceramic comprises: SiO₂ 35.00 mol% to 60.00 mol%, Al₂O₃ 20.00 mol% to 40.00 mol%, ZrO₂ 2.00 mol% to 8.00 mol%, MgO 3.00 mol% to 7.50 mol%, ZnO 7.00 mol% to 13.00 mol%, Na₂O 1.00 mol% to 10.00 mol%, and Li₂O 2.50 mol% to 10.00 mol%, based on a mole percentage of oxides;
the strengthened spinel glass ceramic comprises 15.00 wt% to 45.00 wt% of a (Zn, Mg)Al₂O₄ crystalline phase based on the strengthened spinel glass ceramic;
where W_{[(Zn, Mg)Al2O4]} is a weight percentage of the (Zn, Mg)Al₂O₄ crystalline phase based on the strengthened spinel glass ceramic, W_{[Al2O3]} is a weight percentage of Al₂O₃ based on the strengthened spinel glass ceramic, W_{[MgO]} is a weight percentage of MgO based on the strengthened spinel glass ceramic, W_{[ZnO]} is a weight percentage of ZnO based on the strengthened spinel glass ceramic; $A = \left(1-{W}_{\left[\left(Zn, Mg\right)Al2O4\right]}/2\right) \times {W}_{\left[Al2O3\right]} / 2 ,$ $B = \left(1-{W}_{\left[\left(Zn, Mg\right)Al2O4\right]}\right) \times \left({W}_{\left[MgO\right]}+{W}_{\left[ZnO\right]}\right) ,$ $C = A / B , and in the strengthened spinel glass ceramic , 1.50 \leq C \leq 1.85 .$

16. The strengthened spinel glass ceramic according to claim 15, wherein in the strengthened spinel glass ceramic, a value of A is 10.00% to 25.00%, preferably 14.00% to 25.00%; and/or, a value of B is 7.50% to 12.50%, preferably 8.00% to 12.00%; and/or,
the strengthened spinel glass ceramic further comprises a tetragonal ZrO₂ crystalline phase, and a total content of the (Zn, Mg)Al₂O₄ crystalline phase and the tetragonal ZrO₂ crystalline phase accounts for 25.00 wt% to 70.00 wt% of the strengthened spinel glass ceramic, preferably accounts for 30.00 wt% to 50.00 wt% of the strengthened spinel glass ceramic; and/or,
in the strengthened spinel glass ceramic, a ratio of the (Zn, Mg)Al₂O₄ crystalline phase to the tetragonal ZrO₂ crystalline phase is 1.00 to 18.00, preferably 1.00 to 15.00; and/or,
in the strengthened spinel glass ceramic, an average crystal size of the (Zn, Mg)Al₂O₄ crystalline phase is 3.0 nm to 10.0 nm, preferably 4.0 nm to 8.0 nm, more preferably 4.0 nm to 7.5 nm.

17. The strengthened spinel glass ceramic according to claim 15 or 16, wherein the composition at the center of the strengthened spinel glass ceramic satisfies: $1.30 \leq ZnO / MgO \leq 2.50 ;$ and/or, $0.05 \leq {Li}_{2} O / \left({Al}_{2}{O}_{3}-\left(MgO+ZnO\right)+{SiO}_{2}\right) \leq 0.20 ;$ and/or, $0.19 \leq \left({Al}_{2}{O}_{3}-\left(MgO+ZnO\right)\right) / {SiO}_{2} \leq 0.60 ;$ and/or, $0.26 \leq {Na}_{2} {O / Li}_{2} O \leq 3.00 ;$ and/or,
12.00 mol% ≤ ZnO+MgO ≤ 20.00 mol%, preferably, 13.00 mol% ≤ ZnO+MgO ≤ 17.30 mol%; and/or,
9.00 mol% ≤ Al₂O₃-(MgO+ZnO) ≤ 22.00 mol%, preferably, 10.00 mol% ≤ Al₂O₃-(MgO+ZnO) ≤ 20.00 mol%; and/or,
5.00 mol% ≤ Na₂O+Li₂O ≤ 15.00 mol%, preferably, 6.00 mol% ≤ Na₂O+Li₂O ≤ 13.50 mol%,
based on mole percentage of oxides; and/or,
the composition at the center of the strengthened spinel glass ceramic further comprises: K₂O 0.00 mol% to 5.00 mol%, CaO 0.00 mol% to 10.00 mol%, B₂O₃ 0.00 mol% to 10.00 mol%, and BaO 0.00 mol% to 5.00 mol%, based on mole percentage of oxides.

18. The strengthened spinel glass ceramic according to any one of claims 15 to 17, wherein in an X-ray diffraction pattern of the strengthened spinel glass ceramic, a peak with a maximum peak intensity among characteristic peaks within the 2θ angle range of 28° to 32° is a first characteristic peak, and a peak with a maximum peak intensity among characteristic peaks within the 2θ angle range of 36° to 38° is a second characteristic peak, a peak intensity ratio X of the first characteristic peak to the second characteristic peak is 0.80 to 1.50, preferably the peak intensity ratio X is 0.85 to 1.30; and/or,
in the X-ray diffraction pattern of the strengthened spinel glass ceramic, a characteristic peak of [400] crystal plane of the (Zn, Mg)Al₂O₄ crystalline phase is located within the 2θ angle range of 44° to 46°, a characteristic peak of [311] crystal plane of the (Zn, Mg)Al₂O₄ crystalline phase is located within the 2θ angle range of 34° to 38°, and a characteristic peak of [440] crystal plane of the (Zn, Mg)Al₂O₄ crystalline phase is located within the 2θ angle range of 64° to 67°;
a full width at half maximum W_{[400]} of the characteristic peak of [400] crystal plane is 0.650° to 1.800°, preferably W_{[400]} is 0.900° to 1.600°;
a full width at half maximum W_{[311]} of the characteristic peak of [311] crystal plane is 0.900° to 2.800°, preferably W_{[311]} is 1.100° to 2.230°;
a full width at half maximum W_{[440]} of the characteristic peak of [440] crystal plane is 0.750° to 2.000°, preferably W_{[440]} is 0.900° to 1.600°.

19. The strengthened spinel glass ceramic according to any one of claims 15 to 18, wherein the strengthened spinel glass ceramic is transparent within the visible light range, preferably, a transmittance of the strengthened spinel glass ceramic with a thickness of 0.7 mm at a wavelength of 550 nm is greater than or equal to 85%; and/or,
the strengthened spinel glass ceramic has a depth of the compressive stress layer DOL_0 ≥ 0.21t, preferably, 0.21t ≤ DOL_0 ≤ 0.25t, where t is a thickness of the strengthened spinel glass ceramic; and/or,
the strengthened spinel glass ceramic has a CS_50 ≥ 100 MPa, preferably, 100 MPa ≤ CS_50 ≤ 250 MPa; and/or,
the strengthened spinel glass ceramic has a |CT_AV| ≥ 70 MPa, preferably, 70 MPa ≤ |CT_AV| ≤ 110 MPa; and/or,
the strengthened spinel glass ceramic has a |CT_CV| ≥ 80 MPa, preferably, 80 MPa ≤ |CT_CV| ≤ 150 MPa; and/or,
the strengthened spinel glass ceramic has a Vickers hardness greater than or equal to 790 kgf/mm², preferably 790 kgf/mm² to 1000 kgf/mm²; and/or,
the strengthened spinel glass ceramic has a fracture toughness greater than or equal to 1.00 MPa·m^{1/2}, preferably greater than or equal to 1.20 MPa·m^{1/2}.

20. A glass device, prepared from the spinel glass ceramic according to any one of claims 1 to 14 or prepared from the strengthened spinel glass ceramic according to any one of claims 15 to 19.

21. An electronic apparatus, comprising the spinel glass ceramic according to any one of claims 1 to 14 or comprising the strengthened spinel glass ceramic according to any one of claims 15 to 19.
